# EUROPEAN PATENT SPECIFICATION

(11) **EP 3 778 967 B1**
(45) Date of publication and mention of the grant of the patent: **03.05.2023**
(21) Application number: 19781495.7
(22) Date of filing: 04.04.2019
(51) Int. Cl.: C22C 38/00, B60B 35/02, C22C 38/54, C21D 9/28, C22C 38/04, C22C 38/02, C21D 1/18, C21D 9/04, C22C 38/14, C22C 38/44, C22C 38/22, C21D 1/10, C21D 1/26, C21D 1/60

(54) **RAILWAY AXLE**
EISENBAHNACHSE
ESSIEU FERROVIAIRE

(30) Priority: 04.04.2018 JP 2018071977
(43) Date of publication of application: 17.02.2021
(73) Proprietor: NIPPON STEEL CORPORATION, Chiyoda-ku Tokyo 100-8071 (JP)
(72) Inventor: MAKINO, Taizo, Tokyo 100-8071 (JP); KOZUKA, Chihiro, Tokyo 100-8071 (JP); YAMAMOTO, Yuichiro, Tokyo 100-8071 (JP); HATA, Toshiyuki, Tokyo 100-8071 (JP)
(74) Representative: Zimmermann & Partner Patentanwälte mbB
(86) International application number: PCT/JP2019/014953
(87) International publication number: WO 2019/194274

(56) References cited:
- WO-A1-2015/129258
- WO-A1-2017/033818
- CA-A- 1 170 024
- CA-A1- 2 995 917
- CN-A- 101 250 665
- CN-A- 101 250 665
- CN-A- 105 838 988
- CN-A- 106 244 933
- CN-A- 106 244 933
- JP-A- H 108 202
- JP-A- H 108 204
- JP-A- H11 279 696
- JP-A- 2001 206 002
- JP-A- 2001 206 002

## Description

### TECHNICAL FIELD

The present invention relates to an axle, and more particularly to a railway axle used for a railway vehicle.

### BACKGROUND ART

A railway wheel is press-fitted on each fitting portion of a railway axle. During the use, the railway axle supports the weight of a railway vehicle.
Specifically, interference is provided to each fitting portion of the railway axle to make a hole diameter of a boss portion of the railway wheel slightly smaller than the diameter of the fitting portion of the railway axle. The railway axle further receives a force in the horizontal direction due to a contact between the railway wheel and a rail each time the railway vehicle passes a curved rail (passes a curve). In other words, when the railway vehicle passes a curve, the railway axle repeatedly receives rotating bending stress each time the railway wheel turns one time. The amplitude of such bending stress increases when the railway vehicle passes the curve.

As described above, the railway axle includes the fitting portion on which the railway wheel is press-fitted, and the fitting portion has a contact interfacial pressure against the hole of the boss portion of the railway wheel. Therefore, slight slippage may repeatedly occur at the fitting portion of the railway axle due to a contact between the fitting portion and the railway wheel. Hereinafter, slight slippage which occurs due to a contact between the fitting portion of the railway axle and the railway wheel is referred to as fretting. It is known that the fitting portion of the railway axle may receive damage due to fretting (hereinafter also referred to as "fretting fatigue").

To suppress such fretting fatigue, induction hardening may be performed on the above-mentioned fitting portion of the railway axle. In the outer layer of the fitting portion, hardness increases in a region on which induction hardening is performed. In the outer layer of the fitting portion, the region where hardness is increased by performing induction hardening as described above is referred to as "hardened layer". Compressive residual stress is generated in the hardened layer. The compressive residual stress generated due to the formation of the hardened layer suppresses extension of cracks caused by fretting. In other words, the hardened layer of the railway axle formed by performing induction hardening can suppress fretting fatigue in the railway axle.

Each of Japanese Patent Application Publication No. 10-8202A (Patent Literature 1), Japanese Patent Application Publication No. 11-279696A (Patent Literature 2), and Japanese Patent Application Publication No. 2000-73140A (Patent Literature 3) proposes a railway axle where fretting fatigue in a fitting portion is suppressed by performing induction hardening.

The railway axle disclosed in Patent Literature 1 contains, in mass%, C: 0.3 to 0.48%, Si: 0.05 to 1%, Mn: 0.5 to 2%, Cr: 0.5 to 1.5%, Mo: 0.15 to 0.3%, and Ni: 0 to 2.4%. In this axle, a surface portion on which a wheel is fitted has an effective case depth of from 1 to 4.5 mm, the effective case having Vickers hardness of 400 or more. A region of martensite or bainite is disposed inward of the surface portion. Patent Literature 1 describes that the above-mentioned railway axle has the high fatigue limit.

The railway axle disclosed in Patent Literature 2 contains, in mass%, C: 0.3 to 0.48%, Si: 0.05 to 1%, Mn: 0.5 to 2%, Cr: 0.5 to 1.5%, Mo: 0.15 to 0.3%, and Ni: 0 to 2.4%. A fitting portion of this railway axle has a hardened layer with Vickers hardness of 400 or more, and also has a region of tempered martensite or bainite disposed inward of the hardened layer. In this railway axle, the depth of the hardened layer is 5.0 mm or more, and is 10% or less of the diameter of the fitting portion. Patent Literature 2 describes that the above-mentioned railway axle has the high fretting fatigue limit.

The railway axle disclosed in Patent Literature 3 contains, in mass%, C: 0.3 to 0.48%, Si: 0.05 to 1%, Mn: 0.5 to 2%, Cr: 0 to 1.5%, Mo: 0 to 0.3%, and Ni: 0 to 2.4%. Each of a fitting end portion of this axle and a region around the fitting end portion has a hardened layer having Vickers hardness of 400 or more. K/D which is the ratio of the thickness (K) of the hardened layer to a diameter (D) of the fitting portion is 0.005 to 0.05. An upper portion of the hardened layer contains 0.02 to 2% of B. Patent Literature 3 describes that the above-mentioned railway axle has the excellent fatigue limit.

Patent Literature 4 discloses a high-speed axle steel material and a heat treatment method thereof. The high-speed axle steel material comprises 0.22 wt%-0.29 wt% of C, 0.17 wt%-0.38 wt% of Si, 0.53 wt%-0.77 wt% of Mn, 0-0.015 wt% of P, 0-0.010 wt% of S, 0.20 wt%-0.27 wt% of Ni, 0.95 wt%-1.15 wt% of Cr, 0-0.15 wt% of Cu, 0.20 wt%-0.29 wt% of Mo, 0.02 wt%-0.05 wt% of V, 0.015 wt%-0.045 wt% of Al, 0.01 wt%-0.03 wt% of Nb, 0-15 ppm of O, 0-1.5 ppm of H and the balance Fe and other inevitable elements. The heat treatment method comprises the following heat treatment requirements that the normalizing heating temperature is 880°C-920°C; the quenching heating temperature is 870°C-900°C; the heat preservation time is 4-9 h; and the tempering heating temperature is 630°C-660°C. According to the high-speed axle steel material, the yield strength, the tensile strength and the impact toughness are higher than those of an ordinary axle LZ50, the grain size grade is higher, the inclusion size is smaller, the component segregation index is lower, and the fatigue limit is 403 MPa or above and is 103 MPa higher than that of the LZ50.

Patent Literature 5 discloses a process for producing axles, especially of railway rolling stock, by forging in a mould (9, 10, 13, 14) a heted blank (8) of a diameter less than the largest diameter of the axle to be produced, characterised in that at least some of the blank (8) is heated to a temperature of between 1100° and 1300°C, preferably near 1260°C, in that the axle has two spindles (f1 , f2), and in that forging includes a simultaneous operation of upsetting the central parts (c, pc, pd) of the axle and extruding at least one of the two spindles (f1 , f2), this simultaneous operation being carried out as a result of a movement towards the centre of the axle of at least one ring (13, 14) forming part of the mould, this movement being produced by means of a single press stroke.

### CITATION LIST

### PATENT LITERATURE

Patent Literature 1: Japanese Patent Application Publication No. 10-8202A
Patent Literature 2: Japanese Patent Application Publication No. 11-279696A
Patent Literature 3: Japanese Patent Application Publication No. 2000-73140A
Patent Literature 4: CN 106 244 933 A
Patent Literature 5: CA 1 170 024 A

### SUMMARY OF INVENTION

### TECHNICAL PROBLEM

Patent Literatures 1 to 3 disclose a technique of performing induction hardening on the railway axle to suppress fretting fatigue in the fitting portion. As described above, in the case where induction hardening is performed on the fitting portion of the railway axle to form a hardened layer, fretting fatigue in the fitting portion can be suppressed. There may be a case where induction hardening is performed also on a center parallel portion disposed between the pair of fitting portions of the railway axle.

Due to the structure of the railway axle, a diameter Dw (Diameter of the Wheel seat) of the fitting portion is larger than a diameter D_{A} (Diameter of the Axle body) of the center parallel portion. Therefore, in the case where induction hardening is performed on both the fitting portion and the center parallel portion of the railway axle, the center parallel portion is farther from a high-frequency heating device. In this case, it is more difficult to perform hardening on the center parallel portion than on the fitting portion. Accordingly, the case depth of the center parallel portion is smaller than the case depth of the fitting portion.

For this reason, to make the case depth of the fitting portion and the case depth of the center parallel portion substantially equal to each other, the conventional railway axle is formed such that the diameter Dw of the fitting portion and the diameter D_{A} of the center parallel portion are made as close to each other as possible. More specifically, D_{W}/D_{A} which is a ratio of the diameter Dw of the fitting portion to the diameter D_{A} of the center parallel portion (hereinafter also referred to as "diameter ratio D_{W}/D_{A}") is set to less than 1.05, and is made as close to 1.00 as possible. The reason is as follows. As the diameter ratio D_{W}/D_{A} is closer to 1.00, the case depth of the center parallel portion is made closer to the case depth of the fitting portion, so that a hardened layer having a certain depth is formed.

Recently, there is an increasing demand for a reduction in weight of a railway axle. It is preferable that the fatigue limit be maintained even when the weight of the railway axle is reduced. However, in the above-mentioned Patent Literatures 1 to 3, the fatigue limit of the railway axle when the weight of the railway axle is reduced is not studied.

It is an objective of this invention to provide a railway axle that can achieve a reduction in weight and that has the excellent fatigue limit.

### SOLUTION TO PROBLEM

The present invention is defined in the claims that follow.

### ADVANTAGEOUS EFFECTS OF INVENTION

The railway axle according to this invention can achieve a reduction in weight, and has the excellent fatigue limit.

### BRIEF DESCRIPTION OF DRAWINGS

[FIG. 1] FIG. 1 is a side view of a railway axle according to this embodiment of the invention.
[FIG. 2] FIG. 2 is a cross-sectional view of the railway axle according to this embodiment of the invention.
[FIG. 3] FIG. 3 is an enlarged cross-sectional view of a region 200 shown in FIG. 2.
[FIG. 4] FIG. 4 is an enlarged cross-sectional view of a region 300 shown in FIG. 2.
[FIG. 5] FIG. 5 is a cross-sectional view taken along line segment II-II in FIG. 2.
[FIG. 6] FIG. 6 is a side view of the railway axle according to this embodiment of the invention, FIG. 6 being different from FIG. 1.
[FIG. 7] FIG. 7 is a side view of the railway axle according to this embodiment of the invention, which is different from FIG. 1 and FIG. 6.
[FIG. 8] FIG. 8 is a schematic view for describing a method for performing induction hardening using an induction hardening apparatus in a process of producing the railway axle of this embodiment of the invention.
[FIG. 9] FIG. 9 is a schematic view for describing a method for performing induction hardening using the induction hardening apparatus, which is a continuation of FIG. 8.
[FIG. 10] FIG. 10 is a cross-sectional view of a crude product of this example.
[FIG. 11] FIG. 11 is a side view of a railway axle of this example.
[FIG. 12] FIG. 12 is a schematic view of a fatigue testing device for the railway axle of this example.

### DESCRIPTION OF EMBODIMENTS OF THE INVENTION

To reduce the weight of the railway axle, the present inventors have made studies on reducing a diameter D_{A} of a center parallel portion and on maintaining the high fatigue limit. Therefore, the present inventors have made studies firstly on increasing a diameter ratio D_{W}/D_{A}, which is the ratio of a diameter Dw of a fitting portion to the diameter D_{A} of the center parallel portion. As a result, the present inventors have obtained the following findings.

Increasing the diameter ratio D_{W}/D_{A} may further suppress fretting fatigue in the fitting portion. The present inventors consider the reason to be as follows. As described above, it is considered that fretting fatigue is caused due to slight slippage which repeatedly occurs due to the contact between the fitting portion and the railway wheel as a result of bending stress applied to the railway axle. When the bending stress is applied, stress applied to the surface of the fitting portion varies depending on the diameter ratio D_{W}/D_{A}. Specifically, when the diameter ratio D_{W}/D_{A} is large, the bending stress applied to the surface of the fitting portion is easily reduced. Therefore, increasing the diameter ratio D_{W}/D_{A} can further suppress fretting fatigue in the fitting portion. In other words, increasing the diameter ratio D_{W}/D_{A} increases the fatigue limit of the fitting portion.

In contrast, reducing the diameter D_{A} of the center parallel portion causes fatigue fracture to easily occur in the center parallel portion, so that the fatigue limit easily decreases. In view of the above, to increase the fatigue limit of the center parallel portion even when the diameter D_{A} of the center parallel portion and the diameter D_{W} of the fitting portion are set to have a large difference, the present inventors have made studies by focusing on a case depth Cw of the fitting portion and a case depth C_{A} of the center parallel portion.

First, the present inventors have made studies on the chemical composition of the railway axle where the fitting portion and the center parallel portion have the fatigue limit. As a result, the present inventors have considered that when the chemical composition of the base metal portion disposed inward of a hardened layer (the fitting portion hardened layer and the center parallel portion hardened layer) of the railway axle consists of, in mass%, C: 0.22 to 0.29%, Si: 0.15 to 0.40%, Mn: 0.50 to 0.80%, P: 0.020% or less, S: 0.040% or less, Cr: 0.90 to 1.20%, Mo: 0.15 to 0.30%, N: 0.0200% or less, O: 0.0040% or less, Ca: 0 to 0.0010%, Cu: 0 to 0.30%, Ni: 0 to 0.30%, Al: 0 to 0.100%, V: 0 to 0.060%, Ti: 0 to 0.020%, Nb: 0 to 0.030%, B: 0 to 0.0050%, and the balance being Fe and impurities, the weight of the railway axle can be reduced, and both the fitting portion and the center parallel portion may obtain excellent fatigue strength.

Next, the present inventors have made researches and studies in detail on the position of fracture in the case where fatigue fracture occurs in the railway axle where the base metal portion disposed inward of the hardened layer has the above-mentioned chemical composition. As a result, it is found that there is the case where fatigue fracture occurs in the fitting portion and the case where fatigue fracture occurs in the center parallel portion. It is also found that the starting point of fracture in the fitting portion differs from the starting point of fracture in the center parallel portion.

Specifically, fatigue fracture in the fitting portion is caused by fretting fatigue. Further, the starting point of fracture is on the surface of the fitting portion. Whereas, in the center parallel portion, the starting point of fatigue fracture is not generated on the surface, but is generated at a position inward of the surface by a predetermined depth. In other words, fatigue fracture in the center parallel portion is not caused by fretting fatigue, but is caused by bending fatigue.

As described above, in the conventional railway axle, the depth of the hardened layer of the fitting portion is substantially equal to the case depth of the center parallel portion, or the hardened layer of the fitting portion is formed with a larger depth than the case depth of the center parallel portion. In other words, the ratio of the case depth Cw of the fitting portion to the case depth C_{A} of the center parallel portion (hereinafter also referred to as "case depth ratio C_{W}/C_{A}") is 1.00 or more. However, as described above, the starting point of fracture in the center parallel portion is disposed at a position deeper than the starting point of fracture in the fitting portion. Therefore, when the hardened layer of the center parallel portion is formed with a larger depth than the hardened layer of the fitting portion, the fatigue limit of the center parallel portion may be increased. Whereas the starting point of fracture in the fitting portion is on the surface. As described above, compressive residual stress is applied to the hardened layer. When the case depth is excessively large, compressive residual stress actually reduces. Accordingly, when the case depth Cw of the fitting portion is set smaller than the case depth C_{A} of the center parallel portion, compressive residual stress increases, so that fatigue fracture in the fitting portion can be suppressed.

Based on the above-mentioned findings, the present inventors have made studies in detail on the diameter ratio D_{W}/D_{A} between the fitting portion and the center parallel portion of the railway axle, and the case depth ratio C_{W}/C_{A} between the fitting portion and the center parallel portion. As a result, the following findings are obtained.

As described above, increasing the diameter ratio D_{W}/D_{A} increases the fatigue limit (fretting fatigue limit) of the fitting portion. However, when the diameter ratio D_{W}/D_{A} is excessively high, the center parallel portion has an excessively small diameter, so that the fatigue limit (the bending fatigue limit) of the center parallel portion decreases. Accordingly, the diameter ratio D_{W}/D_{A} is set to 1.10 to 1.30 on the premise that other requirements described later are satisfied.

As described above, decreasing the case depth ratio C_{W}/C_{A} increases the bending fatigue limit of the center parallel portion. However, when the case depth ratio C_{W}/C_{A} is excessively low, compressive residual stress in the surface becomes small. In this case, the position of the starting point of a crack moves to the surface from the inside. Therefore, the bending fatigue limit of the center parallel portion actually decreases. Accordingly, the case depth ratio C_{W}/C_{A} is set to 0.34 to 0.93 on the premise that other requirements are satisfied.

Further, the fatigue limit (fretting fatigue limit) of the fitting portion is increased by causing compressive residual stress to be generated in the hardened layer of the fitting portion. Accordingly, when the case depth Cw of the fitting portion is set to 2.5 mm to 0.10×D_{W} (mm), compressive residual stress increases, so that the fatigue limit of the fitting portion further increases.

The railway axle of this invention is based on the above-mentioned findings.

Hereinafter, a railway axle according to this invention will be described in detail.

### [Configuration of railway axle]

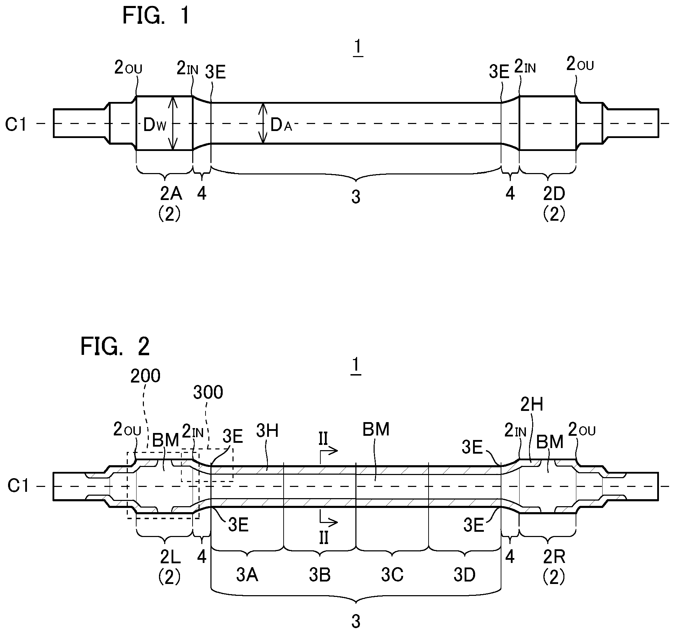

FIG. 1 is a side view of the railway axle according to this embodiment of the invention. Referring to FIG. 1, a railway axle 1 of the invention of the invention includes a pair of fitting portions 2A and 2D, and a center parallel portion 3. Each of the pair of fitting portions 2A and 2D is a column having a diameter Dw. The center axes of the fitting portions 2A and 2D are aligned with a center axis C1 of the railway axle 1.
The center axis C1 of the railway axle 1 extends in the longitudinal direction of the railway axle 1. In the description made hereinafter, "the direction of the center axis C1" of the railway axle 1 has the same meaning as "the longitudinal direction" of the railway axle 1.

In FIG. 1, the fitting portion 2A is connected with the left end of the center parallel portion 3. In FIG. 1, the fitting portion 2D is connected with the right end of the center parallel portion 3. In the description made hereinafter, the fitting portions 2A and 2D are also collectively referred to as "fitting portion 2". A railway wheel not shown in the drawing is to be press-fitted on each fitting portion 2.

The center parallel portion 3 is disposed between the pair of fitting portions 2A and 2D. In FIG. 1, the left end of the center parallel portion 3 is connected with the fitting portion 2A disposed at the left portion of the railway axle 1. The right end of the center parallel portion 3 is connected with the fitting portion 2D disposed at the right portion of the railway axle 1. The center parallel portion 3 is a column having a diameter D_{A}. The diameter D_{A} of the center parallel portion 3 is smaller than the diameter D_{W} of the fitting portion 2. The center axis of the center parallel portion 3 is aligned with the center axis C1 of the railway axle 1. In other words, the center parallel portion 3 is disposed coaxially with the pair of fitting portions 2.

The pair of fitting portions 2 may be solid or hollow. In the same manner, the center parallel portion 3 may be solid or hollow. The diameter D_{A} of the center parallel portion is not particularly limited. However, the diameter D_{A} of the center parallel portion may be 100 to 200 mm, for example. The diameter D_{W} of the fitting portion 2 is not particularly limited. However, the diameter Dw of the fitting portion 2 may be 110 to 260 mm, for example.

Each of the pair of fitting portions 2 has an inner end 2_{IN} and an outer end 2_{OU}. The inner end 2_{IN} is disposed at a position closer to the center parallel portion 3 in the direction of the center axis C1 of the railway axle 1 than the center position of the fitting portion 2 is. Whereas the outer end 2_{OU} is disposed at a position farther from the center parallel portion 3 in the direction of the center axis C1 of the railway axle 1 than the center position of the fitting portion 2 is. Specifically, in FIG. 1, the inner end 2_{IN} of the fitting portion 2A is disposed closer to the center parallel portion 3 than the outer end 2ou of the fitting portion 2A, and the inner end 2_{IN} of the fitting portion 2A is connected with a left end 3E of the center parallel portion 3 via a tapered portion 4. In FIG. 1, the inner end 2_{IN} of the fitting portion 2D is disposed closer to the center parallel portion 3 than the outer end 2ou of the fitting portion 2D, and the inner end 2_{IN} of the fitting portion 2D is connected with a right end 3E of the center parallel portion 3 via a tapered portion 4.

In FIG. 1, the railway axle 1 also includes the tapered portions 4 each of which continuously connects the center parallel portion 3 and the fitting portion 2 with each other, each tapered portion 4 being disposed between the end portion 3E of the center parallel portion 3 and the inner end 2_{IN} of the fitting portion 2. The diameter of the tapered portion 4 increases from the end portion 3E of the center parallel portion 3 toward the inner end 2_{IN} of the fitting portion 2 in the direction of the center axis C1 of the railway axle 1. In the cross section including the center axis C1 of the railway axle 1 as shown in FIG. 1, the tapered portion 4 may have either a curved surface or a linear surface. The railway axle 1 may not include the tapered portions 4. In this case, each end portion 3E of the center parallel portion 3 is connected with the inner end 2_{IN} of each fitting portion 2, so that a stepped portion is formed between the end portion 3E of the center parallel portion 3 and the inner end 2_{IN} of the fitting portion 2.

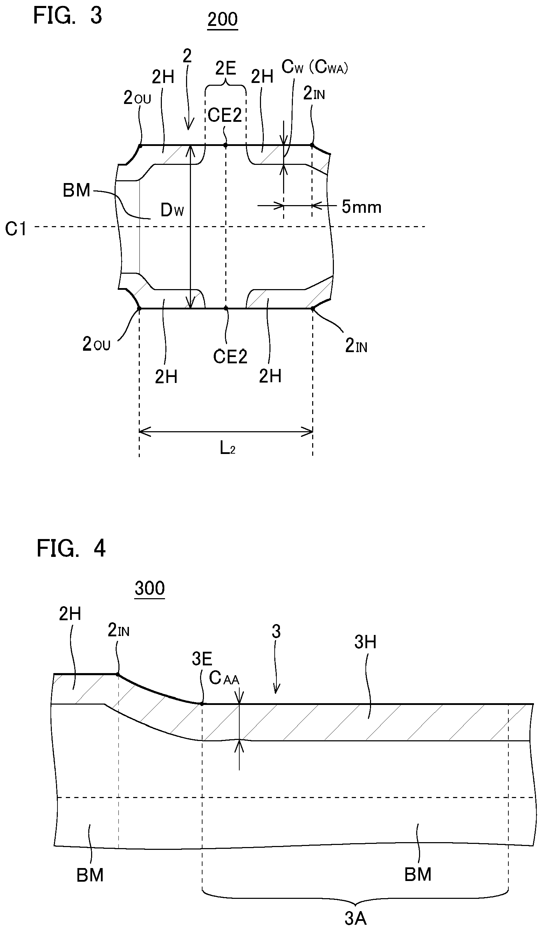

FIG. 2 is a cross-sectional view of the railway axle 1 of this embodiment of the invention shown in FIG. 1 taken along a plane including the center axis C1 of the railway axle 1. FIG. 3 is an enlarged cross-sectional view of a region 200 shown in FIG. 2. Referring to FIG. 2 and FIG. 3, each of the fitting portions 2 (2A and 2D) includes a fitting portion hardened layer 2H formed in an outer layer, and a base metal portion BM disposed inward of the fitting portion hardened layer 2H. The fitting portion hardened layer 2H is formed in the outer layer ranging from the surface of the fitting portion 2 to a predetermined depth.

Referring to FIG. 2 and FIG. 3, the fitting portion hardened layer 2H may not be formed over the entire surface of the fitting portion 2. In FIG. 2 and FIG. 3, the fitting portion hardened layer 2H is formed at a portion in a region disposed closer to the outer end 2ou in the direction of the center axis C1 of the railway axle 1 than a center position CE2 of the fitting portion 2, and at a portion in a region disposed closer to the inner end 2_{IN} in the direction of the center axis C1 of the railway axle 1 than the center position CE2 is. The fitting portion hardened layer 2H is not formed at a portion in a region including the center position CE2. As described above, the fitting portion hardened layer 2H may not be formed over the entire surface of the fitting portion 2, and may be formed in at least some regions, in the direction of the center axis C1, on the surface of the fitting portion 2. Further, the fitting portion hardened layer 2H may be formed over the entire surface of the fitting portion 2. The fitting portion hardened layer 2H will be described later.

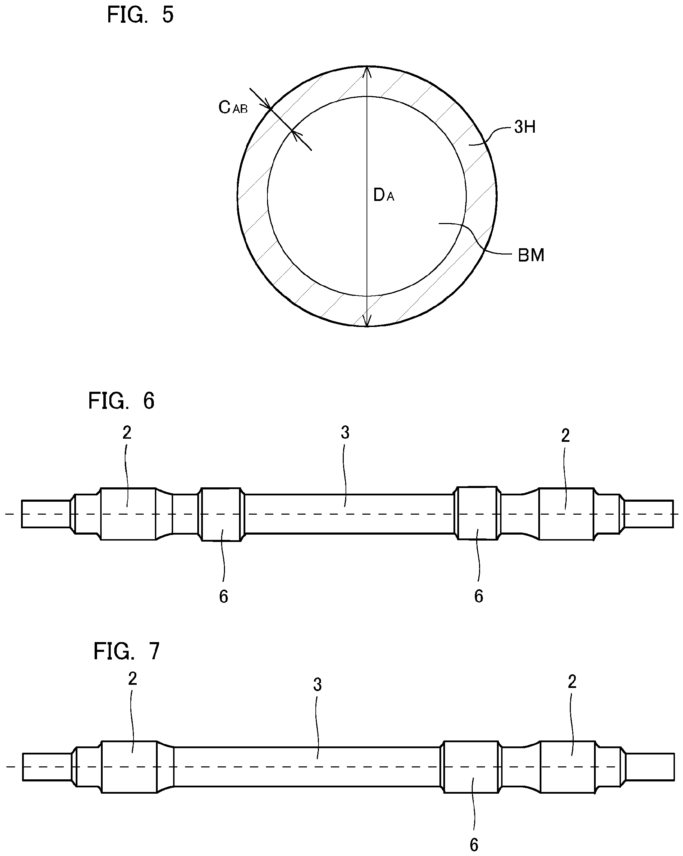

FIG. 4 is an enlarged cross-sectional view of a region 300 shown in FIG. 2. FIG. 5 is a cross-sectional view taken along line segment II-II in FIG. 2. Referring to FIG. 2, FIG. 4, and FIG. 5, the center parallel portion 3 also includes a center parallel portion hardened layer 3H formed in the outer layer of the center parallel portion 3, and the base metal portion BM disposed inward of the center parallel portion hardened layer 3H. The center parallel portion hardened layer 3H is formed in the outer layer ranging from the surface of the center parallel portion 3 to a predetermined depth. The center parallel portion hardened layer 3H is formed over the entire surface of the center parallel portion 3. The center parallel portion hardened layer 3H will be described later.

### [Chemical composition of base metal portion BM of fitting portion 2 and center parallel portion 3]

Each of the chemical composition of the base metal portion BM of the pair of fitting portions 2 and the chemical composition of the base metal portion BM of the center parallel portion 3 contains the following elements. In the invention, in the cross section perpendicular to the center axis C1 of the railway axle 1, a line segment connecting the surface of the railway axle 1 and the center axis C1 is defined as "radius R". With such a definition, the chemical composition of the base metal portion BM means the chemical composition at the R/2 position of the fitting portion 2, and the R/2 position of the center parallel portion 3. Hereinafter, "%" in relation to an element means mass% unless otherwise specified.

### C: 0.22 to 0.29%,

Carbon (C) increases the hardness of steel. Performing induction hardening also causes C to increase the hardness of the hardened layer. In the case where C content is less than 0.22%, even when the content of other elements falls within the ranges given in this embodiment of the invention, the hardness of the base metal portion BM and the hardened layers 2H and 3H decreases. Therefore, compressive residual stress in the hardened layer 2H of the fitting portion 2 may decrease. In this case, the fitting portion 2 of the railway axle 1 cannot obtain the sufficient fatigue limit. Whereas in the case where C content is more than 0.29%, even when the content of other elements falls within the ranges given in this embodiment of the invention, quench cracking may occur at the time of performing induction hardening. When C content is more than 0.29%, there may be also a case where the center parallel portion 3 cannot obtain the fatigue limit. Accordingly, C content is set to 0.22 to 0.29%. The lower limit of C content is preferably set to 0.23%, and more preferably set to 0.24%. The upper limit of C content is preferably set to 0.28%, and more preferably set to 0.27%.

### Si: 0.15 to 0.40%

Silicon (Si) deoxidizes steel. Si also increases temper softening resistance of steel, and increases the fatigue limit of the center parallel portion 3. In the case where Si content is less than 0.15%, even when the content of other elements falls within the ranges given in this embodiment of the invention, these advantageous effects cannot be sufficiently obtained. Whereas in the case where Si content is more than 0.40%, even when the content of other elements falls within the ranges given in this embodiment of the invention, quench cracking may occur at the time of performing induction hardening. Accordingly, Si content is set to 0.15 to 0.40%. The lower limit of Si content is preferably set to 0.20%, more preferably set to 0.23%, and more preferably set to 0.25%. The upper limit of Si content is preferably set to 0.37%, more preferably set to 0.35%, and more preferably set to 0.33%.

### Mn: 0.50 to 0.80%

Manganese (Mn) increases hardenability of steel. Performing induction hardening causes Mn to increase the thickness of the hardened layer 2H and 3H. In the case where Mn content is less than 0.50%, even when the content of other elements falls within the ranges given in this embodiment of the invention, the hardened layer 3H of the center parallel portion 3 may have an excessively small thickness. In this case, the center parallel portion 3 cannot obtain sufficient fatigue limit. Whereas in the case where Mn content is more than 0.80%, even when the content of other elements falls within the ranges given in this embodiment of the invention, the hardened layer 2H and 3H formed by performing induction hardening may have an excessively large thickness. In this case, compressive residual stress in the hardened layer 2H decreases, so that the fitting portion 2 cannot obtain sufficient fatigue limit. Accordingly, Mn content is set to 0.50 to 0.80%. The lower limit of Mn content is preferably set to 0.55%, more preferably set to 0.57%, furthermore preferably set to 0.60%, and still furthermore preferably set to 0.62%. The upper limit of Mn content is preferably set to 0.78%, more preferably set to 0.75%, furthermore preferably set to 0.73%, and still furthermore preferably set to 0.70%.

### P: 0.020% or less

Phosphorus (P) is an inevitable impurity. In other words, P content is more than 0%. P segregates in grain boundaries, thus decreasing the fatigue limit of steel. In the case where P content is more than 0.020%, even when the content of other elements falls within the ranges given in this embodiment of the invention, fatigue strength of the railway axle 1 decreases. Accordingly, P content is set to 0.020% or less. The upper limit of P content is preferably set to 0.018%, more preferably set to 0.016%, furthermore preferably set to 0.015%, and still furthermore preferably set to 0.014%. It is preferable that P content be as low as possible. However, an excessive reduction in P content significantly increases production costs. For this reason, in consideration of industrial production, the lower limit of P content is preferably set to 0.001%, and more preferably set to 0.002%.

### S: 0.040% or less

Sulfur (S) is an inevitable impurity. In other words, S content is more than 0%. S is bonded to Mn, thus forming MnS. MnS decreases fatigue strength of steel. In the case where S content is more than 0.040%, even when the content of other elements falls within the ranges given in this embodiment of the invention, stress concentrates on MnS, so that the fatigue limit of the center parallel portion 3 decreases. Accordingly, S content is set to 0.040% or less. The upper limit of S content is preferably set to 0.030%, more preferably set to 0.020%, furthermore preferably set to 0.015%, and still furthermore preferably set to 0.010%. It is preferable that S content be as low as possible. However, an excessive reduction in S content significantly increases production costs. For this reason, in consideration of industrial production, the lower limit of S content is preferably set to 0.001%, and more preferably set to 0.002%.

### Cr: 0.90 to 1.20%

Chromium (Cr) increases hardenability of steel. Performing induction hardening causes Cr to increase the hardness of the hardened layers 2H and 3H. When Cr content is less than 0.90%, the hardened layer 3H of the center parallel portion 3 may have an excessively small thickness. In this case, the center parallel portion 3 cannot obtain the sufficient fatigue limit. Whereas in the case where Cr content is more than 1.20%, even when the content of other elements falls within the ranges given in this embodiment of the invention, the hardened layers 2H and 3H formed by performing induction hardening may have an excessively large thickness. In this case, compressive residual stress in the hardened layer 2H decreases, so that the fitting portion 2 cannot obtain the sufficient fatigue limit. Accordingly, Cr content is set to 0.90 to 1.20%. The lower limit of Cr content is preferably set to 0.95%, more preferably set to 1.00%, furthermore preferably set to 1.02%, and still furthermore preferably set to 1.05%. The upper limit of Cr content is preferably set to 1.19%, more preferably set to 1.17%, and furthermore preferably set to 1.15%.

### Mo: 0.15 to 0.30%

Molybdenum (Mo) increases strength of steel. When Mo content is less than 0.15%, even when the content of other elements falls within the ranges given in this embodiment of the invention, this advantageous effect cannot be sufficiently obtained. Whereas in the case where Mo content is more than 0.30%, even when the content of other elements falls within the ranges given in this embodiment of the invention, the above-mentioned advantageous effect is saturated. Further, when Mo content is more than 0.30%, production costs excessively increase. Accordingly, Mo content is set to 0.15 to 0.30%. The lower limit of Mo content is preferably set to 0.17%, more preferably set to 0.19%, furthermore preferably set to 0.20%, and still furthermore preferably set to 0.21%. The upper limit of Mo content is preferably set to 0.29%, more preferably set to 0.28%, and furthermore preferably set to 0.27%.

### N: 0.0200% or less

Nitrogen (N) is an inevitable impurity. In other words, N content is more than 0%. N is bonded to Al or the like, thus forming fine nitride, and thus making the grain fine. However, when N content is excessively high, coarse nitride is formed, thus decreasing the fatigue limit of steel. In the case where N content is more than 0.0200%, even when the content of other elements falls within the ranges given in this embodiment of the invention, fatigue strength of the railway axle 1 decreases. Accordingly, N content is set to 0.0200% or less. The upper limit of N content is preferably set to 0.0150%, more preferably set to 0.0120%, more preferably set to 0.0100%, more preferably set to 0.0090%, more preferably set to 0.0080%, and more preferably set to 0.0070%. The lower limit of N content for more effectively obtaining the above-mentioned advantageous effects is preferably set to 0.0010%, more preferably set to 0.0020%, and furthermore preferably set to 0.0030%.

### O: 0.0040% or less

Oxygen (O) is an inevitable impurity. In other words, O content is more than 0%. There may be a case where O forms coarse oxide which may become a starting point of fatigue fracture. In the case where O content is more than 0.0040%, even when the content of other elements falls within the ranges given in this embodiment of the invention, the fatigue limit of the center parallel portion 3 decreases. Accordingly, O content is set to 0.0040% or less. The upper limit of O content is preferably set to 0.0030%, more preferably set to 0.0025%, furthermore preferably set to 0.0020%, and still furthermore preferably set to 0.0015%. It is preferable that O content be as low as possible. However, an excessive reduction in O content significantly increases production costs. For this reason, in consideration of industrial production, the lower limit of O content is preferably set to 0.0001%, more preferably set to 0.0002%, and furthermore preferably set to 0.0005%.

### Ca: 0 to 0.0010%

Calcium (Ca) is an impurity. Ca may not be contained. In other words, Ca content may be set to 0%. Ca causes silicate inclusions (a group C specified in JIS G 0555(2003)) to agglomerate, thus decreasing the fatigue limit of steel. In the case where Ca content is more than 0.0010%, even when the content of other elements falls within the ranges given in this embodiment of the invention, the silicate inclusion becomes a starting point of fatigue fracture, so that the fatigue limit of the center parallel portion 3 decreases. Accordingly, Ca content is set to 0 to 0.0010%. The upper limit of Ca content is preferably set to 0.0006%, more preferably set to 0.0004%, and furthermore preferably set to 0.0003%.

In the railway axle 1 according to the invention, the balance of the chemical composition of the base metal portion BM of the fitting portion 2 and the center parallel portion 3 consists of Fe and impurities. In the invention, impurities mean materials which are mixed into a steel material for the railway axle 1 from ore or scrap as a raw material, a production environment or the like in industrially producing the steel material for the railway axle 1, and which are allowed within a range where the impurities do not adversely affect the railway axle 1 of this embodiment of the invention.

The chemical composition of the base metal portion BM of the fitting portion 2 and the center parallel portion 3 of the railway axle 1 according to the invention may further contain one or more elements selected from a group consisting of Cu and Ni in lieu of a part of Fe. Any of these elements is an optional element, and increases strength of steel.

### Cu: 0 to 0.30%

Copper (Cu) is an optional element, and may not be contained. In other words, Cu content may be set to 0%. In the case where Cu is contained, Cu increases strength of steel. When even a small amount of Cu is contained, such an advantageous effect can be obtained to some extent. However, in the case where Cu content is more than 0.30%, even when the content of other elements falls within the ranges given in this embodiment of the invention, hot workability of steel decreases. Accordingly, Cu content is set to 0 to 0.30%. The lower limit of Cu content is preferably set to more than 0%, more preferably set to 0.01%, and more preferably set to 0.02%. The upper limit of Cu content is preferably set to 0.25%, more preferably set to 0.20%, more preferably set to 0.15%, more preferably set to 0.10%, and more preferably set to 0.05%.

### Ni: 0 to 0.30%

Nickel (Ni) is an optional element, and may not be contained. In other words, Ni content may be set to 0%. In the case where Ni is contained, Ni increases strength of steel. When even a small amount of Ni is contained, such an advantageous effect can be obtained to some extent. However, in the case where Ni content is more than 0.30%, even when the content of other elements falls within the ranges given in this embodiment of the invention, the above-mentioned advantageous effect is saturated. Accordingly, Ni content is set to 0 to 0.30%. The lower limit of Ni content is preferably set to more than 0%, more preferably set to 0.01%, furthermore preferably set to 0.02%, and still furthermore preferably set to 0.04%. The upper limit of Ni content is preferably set to 0.25%, more preferably set to less than 0.20%, furthermore preferably set to 0.15%, and still furthermore preferably set to 0.10%.

The chemical composition of the base metal portion BM of the fitting portion 2 and the center parallel portion 3 of the railway axle 1 according to the invention may further contain Al in lieu of a part of Fe,

### Al: 0 to 0.100%

Aluminum (Al) is an optional element, and may not be contained. In other words, Al content may be set to 0%. In the case where Al is contained, Al deoxidizes steel. Further, Al is bonded to N, thus forming AlN, and thus making the grain fine. As a result, toughness of steel increases. When even a small amount of Al is contained, these advantageous effects can be obtained to some extent. However, in the case where Al content is more than 0.100%, even when the content of other elements falls within the ranges given in this embodiment of the invention, coarse oxide inclusions are formed, so that the fatigue limit of the railway axle 1 decreases. Accordingly, Al content is set to 0 to 0.100%. The lower limit of Al content is preferably set to more than 0%, more preferably set to 0.005%, more preferably set to 0.007%, more preferably set to 0.010%, more preferably set to 0.015%, and more preferably set to 0.020%. The upper limit of Al content is preferably set to 0.080%, more preferably set to 0.060%, more preferably set to 0.050%, more preferably set to 0.045%, and more preferably set to 0.040%. In this specification, Al content means the content of acid soluble Al (sol. Al).

The chemical composition of the base metal portion BM of the fitting portion 2 and the center parallel portion 3 of the railway axle 1 according to the invention may further contain one or more elements selected from a group consisting of V, Ti, and Nb in lieu of a part of Fe. Any of these elements is an optional element, and increases strength of steel.

### V: 0 to 0.060%

Vanadium (V) is an optional element, and may not be contained. In other words, V content may be set to 0%. In the case where V is contained, V is bonded to N or C, thus forming V(C, N). In this case, V makes grain fine, thus increasing strength of steel. When even a small amount of V is contained, such an advantageous effect can be obtained to some extent. However, in the case where V content is more than 0.060%, even when the content of other elements falls within the ranges given in this embodiment of the invention, toughness of steel decreases. Accordingly, V content is set to 0 to 0.060%. The lower limit of V content is preferably set to more than 0%, more preferably set to 0.005%, furthermore preferably set to 0.008%, and still furthermore preferably set to 0.010%. The upper limit of V content is preferably set to 0.055%, more preferably set to 0.050%, furthermore preferably set to 0.045%, and still furthermore preferably set to 0.040%.

### Ti: 0 to 0.020%

Titanium (Ti) is an optional element, and may not be contained. In other words, Ti content may be set to 0%. In the case where Ti is contained, Ti is bonded to N, thus forming fine TiN. TiN increases strength of steel. TiN also makes grain fine, thus increasing the fatigue limit of steel. When even a small amount of Ti is contained, such an advantageous effect can be obtained to some extent. However, in the case where Ti content is more than 0.020%, even when the content of other elements falls within the ranges given in this embodiment of the invention, TiN precipitates become paths of cracks, thus decreasing toughness of steel. Accordingly, Ti content is set to 0 to 0.020%. The lower limit of Ti content is preferably set to more than 0%, more preferably set to 0.002%, and furthermore preferably set to 0.003%. The upper limit of Ti content is preferably set to 0.018%, more preferably set to 0.015%, more preferably set to 0.013%, more preferably set to 0.010%, and more preferably set to 0.007%.

### Nb: 0 to 0.030%

Niobium (Nb) is an optional element, and may not be contained. In other words, Nb content may be set to 0%. In the case where Nb is contained, Nb is bonded to N or C, thus forming Nb(C, N). In this case, Nb(C, N) makes grain fine, thus increasing strength and toughness of steel. When even a small amount of Nb is contained, such an advantageous effect can be obtained to some extent. However, in the case where Nb content is more than 0.030%, even when the content of other elements falls within the ranges given in this embodiment of the invention, carbide and/or carbo-nitride formed in steel may be coarsened. In this case, toughness of steel actually decreases. Accordingly, Nb content is set to 0 to 0.030%. The lower limit of Nb content is preferably set to more than 0%, more preferably set to 0.002%, furthermore preferably set to 0.003%, and still furthermore preferably set to 0.005%. The upper limit of Nb content is preferably set to 0.029%, more preferably set to 0.027%, furthermore preferably set to 0.025%, and still furthermore preferably set to 0.020%.

The chemical composition of the base metal portion BM of the fitting portion 2 and the center parallel portion 3 of the railway axle 1 according to this invention may further contain B in lieu of a part of Fe.

### B: 0 to 0.0050%

Boron (B) is an optional element, and may not be contained. In other words, B content may be set to 0%. In the case where B is contained, B increases hardenability of steel. When even a small amount of B is contained, such an advantageous effect can be obtained to some extent. However, in the case where B content is more than 0.0050%, even when the content of other elements falls within the ranges given in this embodiment of the invention, toughness of steel decreases. Accordingly, B content is set to 0 to 0.0050%. The lower limit of B content is preferably set to more than 0%, more preferably set to 0.0003%, furthermore preferably set to 0.0005%, and still furthermore preferably set to 0.0007%. The upper limit of B content is preferably set to 0.0040%, more preferably set to 0.0030%, and furthermore preferably set to 0.0020%.

### [Microstructure of base metal portion BM]

It is preferable that the microstructure of the base metal portion BM of the railway axle 1 according to this embodiment of the invention is mainly composed of martensite and bainite. In this specification, "mainly composed of martensite and bainite" means that the total area fraction of martensite and bainite in the microstructure is 80% or more. Here, martensite also includes tempered martensite. Bainite includes tempered bainite.

In the microstructure of the base metal portion BM of the railway axle 1 according to this embodiment of the invention, the balance forming a portion other than martensite and bainite may be ferrite, for example. The microstructure of the base metal portion BM of the railway axle 1 corresponds to the microstructure of the near-surface portion of the railway axle on which induction hardening is not yet performed. When the microstructure of the base metal portion BM of the railway axle 1 is mainly composed of martensite and bainite, hardness of the near-surface portion of the railway axle 1 increases. Further, when the microstructure is mainly composed of martensite and bainite, the microstructure of the near-surface portion is rapidly austenitized when high-frequency heating is performed. In this case, the fraction of martensite in the hardened layer formed by performing induction hardening increases, so that hardness of the hardened layer increases. As a result, after induction hardening is performed, the fatigue limit of the railway axle 1 further increases.

The total area fraction of martensite and bainite in the microstructure of the base metal portion BM of the railway axle 1 may be obtained by the following method. Five samples for observing the microstructure are taken from R/2 position on a cross section perpendicular to the direction of the center axis C1 of the fitting portion 2 or the center parallel portion 3. The cross section perpendicular to the center axis C1 is used as an observation surface. The observation surface of each sample is polished to a mirror finished surface and, thereafter, is immersed into Nital etching reagent for approximately 10 seconds to develop the microstructure by etching. The etched observation surface is observed by an optical microscope. One field of view is set to 40000 µm² (magnification ×500), and each sample is observed in one field of view (that is, five samples are observed in five fields of view in total). In each field of view, based on the contrast, martensite and bainite, and a phase (ferrite and the like) other than martensite and bainite are identified. It is difficult to differentiate martensite from bainite based on the contrast. However, martensite and bainite can be easily differentiated from the phase other than martensite and bainite, such as ferrite, based on the contrast. Based on the total area of identified martensite and bainite, and the area (40000 µm²) of each field of view, the total area fraction of martensite and bainite in each field of view is obtained. The arithmetic average value of the total area fractions of martensite and bainite obtained in the respective fields of view is defined as the total area fraction (%) of martensite and bainite.

### [Diameter ratio D_{W}/D_{A} between fitting portion 2 and center parallel portion 3]

As described above, the diameter of the fitting portion 2 of the railway axle 1 according to the invention is defined as Dw (mm), and the diameter of the center parallel portion 3 of the railway axle 1 according to this embodiment of the invention is defined as D_{A} (mm). In this case, D_{W}/D_{A} is set to 1.10 to 1.30, D_{W}/D_{A} being the ratio of the diameter Dw of the fitting portion 2 to the diameter D_{A} of the center parallel portion 3.

As described above, in the conventional railway axle 1, the diameter ratio D_{W}/D_{A} is less than 1.10, and is close to 1.00. The reason is as follows. When the diameter ratio D_{W}/D_{A} is large, hardening is not sufficiently performed on the center parallel portion 3 during induction hardening and, as a result, the hardened layer 3H of the center parallel portion 3 is formed with a small depth. When the diameter ratio D_{W}/D_{A} is set close to 1.00, during induction hardening, a distance between the center parallel portion 3 and a high-frequency heating device becomes substantially equal to a distance between the fitting portion 2 and the high-frequency heating device. As a result, although the depth C_{A} of the hardened layer 3H formed in the center parallel portion 3 is smaller than the depth Cw of the hardened layer 2H of the fitting portion 2, the depth C_{A} of the hardened layer 3H is close to the depth Cw. Due to the above-mentioned reason, in the conventional railway axle 1, the diameter ratio D_{W}/D_{A} is set to less than 1.05, and is set as close to 1.00 as possible.

In contrast, in the railway axle 1 according to the invention, the diameter ratio D_{W}/D_{A} is intentionally set to a large value. Specifically, the diameter ratio D_{W}/D_{A} is set to 1.10 or more. In this case, as described above, the fretting fatigue limit of the fitting portion 2 further increases. Further, the weight of the railway axle 1 can be reduced. However, when the diameter ratio D_{W}/D_{A} is excessively large, the fatigue limit of the center parallel portion 3 may decrease. Accordingly, in the railway axle 1 according to the invention, the diameter ratio D_{W}/D_{A} is set to 1.10 to 1.30.

The lower limit of the diameter ratio D_{W}/D_{A} is preferably set to 1.11, more preferably set to 1.12, furthermore preferably set to 1.13, and still furthermore preferably set to 1.14. The upper limit of the diameter ratio D_{W}/D_{A} is preferably set to 1.25, more preferably set to 1.22, more preferably set to 1.20, more preferably set to 1.19, and more preferably set to 1.18.

### [Fitting portion hardened layer 2H and center parallel portion hardened layer 3H]

### [Depth Cw of fitting portion hardened layer 2H]

In each of the pair of fitting portions 2 of the railway axle 1 according to the invention, the depth Cw of the fitting portion hardened layer 2H at a position 5 mm away from the inner end 2_{IN} toward the outer end 2ou of the fitting portion 2 in the direction of the center axis is 2.5 mm to 0.10×D_{W} (mm). In the invention, "depth of hardened layer" means an effective case depth specified in JIS G 0559(2008). Specifically, the effective case depth of the fitting portion hardened layer 2H in this specification means a distance (mm) in the radial direction from the surface of the fitting portion 2 to the position of limit hardness. In the invention, the effective case depth of the center parallel portion hardened layer 3H means a distance (mm) in the radial direction from the surface of the center parallel portion 3 to the position of limit hardness. In the invention, the limit hardness of an effective case is defined, based on JIS G 0559(2008), as 350 HV in terms of Vickers hardness specified in a material with a component where C content is 0.23% or more and less than 0.33%. Accordingly, in the invention, limit hardness is 350 HV in terms of Vickers hardness.

As described above, fretting fatigue is easily generated at each fitting portion 2 of the railway axle 1. In view of the above, in the railway axle 1 according to this embodiment of the invention, the fitting portion hardened layer 2H is formed in the fitting portion 2 by performing induction hardening. In this case, compressive residual stress is generated in the fitting portion 2. As described above, compressive residual stress generated in the fitting portion 2 suppresses extension of cracks caused by fretting. Therefore, fretting fatigue can be suppressed by appropriately adjusting compressive residual stress to be generated in the fitting portion 2.

Referring to FIG. 3, the fitting portion hardened layer 2H may not be formed over the entire surface of the fitting portion 2. It is preferable that, on the surface of the fitting portion 2, the fitting portion hardened layer 2H be formed in each of regions on both sides of the fitting portion 2, each region having a length of at least 1/3 of the length of the fitting portion 2 in the axial direction. In other words, when a distance in the direction of the center axis C1 of the railway axle 1 between the outer end 2ou and the inner end 2_{IN} is defined as "L₂", it is sufficient that the fitting portion hardened layer 2H is formed within a range of at least L₂/3 from the outer end 2ou toward the center position CE2 and within a range of at least L₂/3 from the inner end 2_{IN} toward the center position CE2.

In this invention, the depth Cw of the fitting portion hardened layer 2H means a depth at a position 5 mm away from the inner end 2_{IN} toward the outer end 2ou of the fitting portion 2 in the direction of the center axis C1 of the railway axle 1 (that is, in the longitudinal direction of the railway axle 1) (see FIG. 3). When the depth Cw of the fitting portion hardened layer 2H is less than 2.5 mm, the fitting portion 2 has excessively small compressive residual stress. Whereas when the depth Cw of the fitting portion hardened layer 2H is more than 0.10×D_{W} (mm), compressive residual stress generated in the fitting portion 2 actually reduces. Accordingly, in each fitting portion 2 (2A and 2D) of the railway axle 1 according to this invention, the depth Cw of the fitting portion hardened layer 2H at a position 5 mm away from the inner end 2_{IN} toward the outer end 2ou in the direction of the center axis is set to 2.5 mm to 0.10×D_{W} (mm).

The lower limit of the depth Cw of the fitting portion hardened layer 2H is preferably set to 2.8 mm, more preferably set to 3.0 mm, furthermore, preferably set to 3.5 mm, and still furthermore preferably set to 4.0 mm. The upper limit of the depth Cw of the fitting portion hardened layer 2H is preferably set to 0.09×Dw (mm), more preferably set to 0.085×D_{W} (mm), furthermore preferably set to 0.08×Dw (mm), and still furthermore preferably set to 0.075×Dw (mm).

### [Case depth ratio C_{W}/C_{A}]

In the railway axle 1 according to the invention, C_{W}/C_{A} is set to 0.34 to 0.93, C_{W}/C_{A} being the ratio of the depth Cw of the fitting portion hardened layer 2H to the depth C_{A} of the hardened layer 3H of the center parallel portion.

The ratio of the depth Cw of the fitting portion hardened layer 2H to the depth C_{A} of the center parallel portion hardened layer 3H is defined as "case depth ratio C_{W}/C_{A}". As described above, the conventional railway axle has the case depth ratio C_{W}/C_{A} of 1.0 or more. However, in the railway axle 1 according to this embodiment of the invention, the case depth ratio C_{W}/C_{A} is set to 0.34 to 0.93. In other words, the center parallel portion hardened layer 3H is formed with a depth larger than the depth of the fitting portion hardened layer 2H.

As described above, the starting point of fracture caused by fatigue in the fitting portion 2 is on the surface, whereas the starting point of fracture caused by fatigue in the center parallel portion 3 is at a position inward of the surface. When the depth Cw of the fitting portion hardened layer 2H is set to 2.5 mm to 0.10×D_{W} (mm), and C_{W}/C_{A} is set to 0.34 to 0.93, the fitting portion hardened layer 2H having a sufficient depth and sufficient compressive residual stress is provided as the outer layer of the fitting portion 2. The outer layer of the center parallel portion 3 can also obtain the depth C_{A} which is the sufficient depth of the center parallel portion hardened layer 3H. Therefore, even when the diameter ratio D_{W}/D_{A} between the fitting portion 2 and the center parallel portion 3 is 1.10 to 1.30, the fitting portion 2 can obtain the excellent fatigue limit (fretting fatigue limit), and the center parallel portion 3 can obtain the excellent fatigue limit (the bending fatigue limit).

The lower limit of the case depth ratio C_{W}/C_{A} is preferably set to 0.40, more preferably set to 0.50, more preferably set to 0.55, more preferably set to 0.60, and more preferably set to 0.62. The upper limit of the case depth ratio C_{W}/C_{A} between the fitting portion 2 and the center parallel portion 3 is preferably set to 0.91, more preferably set to 0.89, furthermore preferably set to 0.88, and still furthermore preferably set to 0.87.

The depth Cw of the fitting portion hardened layer 2H, the depth C_{A} of the center parallel portion hardened layer 3H, and the case depth ratio C_{W}/C_{A} may be decided by a method in accordance with JIS G 0559(2008).

### [Method for measuring depth Cw of fitting portion hardened layer 2H]

The depth Cw of the fitting portion hardened layer 2H is defined as follows. Specifically, referring to FIGS. 1 to 3, one point is specified at a position, in the railway axle 1, 5 mm away from the inner end 2_{IN} of the fitting portion 2A or 2D toward the outer end 2_{OU} in the direction of the center axis (longitudinal direction). The railway axle 1 is cut at the specified position along a line perpendicular to the center axis C1, thus forming a cut surface. A sample is taken which has this cut surface, and which includes the outer layer portion of the fitting portion 2. The above-mentioned cut surface is assumed as a measurement surface.

A Vickers hardness test is performed on the above-mentioned measurement surface. Specifically, the Vickers hardness test in accordance with JIS Z 2244(2009) is performed on the measurement surface in the radial direction (depth direction) of the railway axle 1 from the surface of the fitting portion 2 with a load of 2.9 N and a pitch of 0.1 mm so as to measure Vickers hardness (HV). Based on a hardness transition curve obtained by the Vickers hardness test, a distance from the surface of the railway axle 1 to limit hardness is obtained. As described above, the above-mentioned limit hardness means 350 HV in terms of Vickers hardness. In other words, a depth from the surface where Vickers hardness is 350 HV or more (limit hardness or more) is measured. A distance from the surface of the fitting portion 2 to limit hardness is defined as Cw (mm).

In each of the pair of fitting portions 2 of the railway axle 1 according to the invention, the depth Cw of the fitting portion hardened layer 2H at a position 5 mm away from the inner end 2_{IN} toward the outer end 2ou of the fitting portion 2 in the direction of the center axis is 2.5 mm to 0.10×D_{W} (mm).

### [Method for measuring depth C_{A} of center parallel portion hardened layer 3H]

The depth C_{A} of the center parallel portion hardened layer 3H is defined as follows. The center parallel portion 3 of the railway axle 1 is specified. As described above, the center parallel portion 3 is a column of the railway axle 1 which is disposed between the pair of fitting portions 2, and which has a diameter smaller than the diameter Dw of the fitting portion 2. In the case where there are a plurality of columns having diameters smaller than the diameter Dw of the fitting portion 2, a column having the largest length in the direction of the center axis is defined as the center parallel portion 3.

Referring to FIG. 2, the specified center parallel portion 3 is divided into four sections 3A to 3D equidistantly in the direction of the center axis C1. Specifically, in the direction of the center axis C1 of the railway axle 1, the specified center parallel portion 3 is divided into the section 3A, the section 3B, the section 3C, and the section 3D, the section 3A and the section 3B being disposed on the fitting portion 2A side of the center position of the center parallel portion 3, the section 3C and the section 3D being disposed on the fitting portion 2D side of the center position of the center parallel portion 3. The depth of the center parallel portion hardened layer 3H of each of the sections 3A to 3D is measured by the following method.

The depth C_{AA} of the center parallel portion hardened layer 3H of the section 3A and the depth C_{AD} of the center parallel portion hardened layer 3H of the section 3D are defined as follows. Referring to FIG. 2 and FIG. 4, the depth C_{AA} of the center parallel portion hardened layer 3H of the section 3A will be described. As shown in FIG. 4, the section 3A is cut along a plane including the direction of the center axis C1 of the railway axle 1 and the radial direction of the center parallel portion 3. This cut surface is assumed as a measurement surface.

The measurement surface is polished to a mirror finished surface and, thereafter, is immersed into Nital etching reagent for approximately 10 seconds to develop the microstructure by etching. The etched observation surface is visually checked to identify a position where the center parallel portion hardened layer 3H has the smallest thickness on the measurement surface. At the identified position, a distance from the surface of the railway axle 1 to limit hardness is obtained by substantially the same method as used for obtaining the depth Cw of the fitting portion hardened layer 2H. The obtained distance to the limit hardness is defined as the depth C_{AA} (mm) of the center parallel portion hardened layer 3H. The depth C_{AD} (mm) of the center parallel portion hardened layer 3H of the section 3D is also defined by the same method as used for obtaining the depth C_{AA} (mm) of the center parallel portion hardened layer 3H of the section 3A.

The depth C_{AB} of the center parallel portion hardened layer 3H of the section 3B and the depth C_{AC} of the center parallel portion hardened layer 3H of the section 3C are defined as follows. Specifically, referring to FIG. 5, the depth C_{AB} of the center parallel portion hardened layer 3H of the section 3B will be described. The section 3B of the railway axle 1 is cut, at an arbitrary point, along a line perpendicular to the center axis of the railway axle 1 (see FIG. 5). The cut surface is polished to a mirror finished surface and, thereafter, is immersed into Nital etching reagent for approximately 10 seconds to develop the microstructure by etching. The etched observation surface is visually checked to identify a position where the center parallel portion hardened layer 3H has the smallest thickness on the cut surface. At the identified position, a distance from the surface of the railway axle 1 to limit hardness is obtained by substantially the same method as used for obtaining the depth Cw of the fitting portion hardened layer 2H. The obtained distance to the limit hardness is defined as the depth C_{AB} (mm) of the center parallel portion hardened layer 3H. The depth C_{AC} (mm) of the center parallel portion hardened layer 3H of the section 3C is also defined by substantially the same method as used for obtaining the depth C_{AB} of the center parallel portion hardened layer 3H of the section 3B.

The sections 3A and 3B are disposed on the fitting portion 2A side of the center position of the center parallel portion 3 in the direction of the center axis C1 of the railway axle 1, and C_{AA} of the section 3A and C_{AB} of the section 3B are obtained. Either C_{AA} or C_{AB} whichever has the smaller value is defined as a depth C_{A1} (mm) of the center parallel portion hardened layer 3H which corresponds to the fitting portion 2A. The ratio of the depth Cw (mm) of the fitting portion hardened layer 2H of the fitting portion 2A to the depth C_{A1} (mm) of the center parallel portion hardened layer 3H is defined as a case depth ratio C_{W}/C_{A1}.

In the same manner, the sections 3C and 3D are disposed on the fitting portion 2D side of the center position of the center parallel portion 3 in the direction of the center axis C1 of the railway axle 1, and C_{AC} of the section 3C and C_{AD} of the section 3D are obtained. Either C_{AC} or C_{AD} whichever has the smaller value is defined as a depth C_{A2} (mm) of the center parallel portion hardened layer 3H which corresponds to the fitting portion 2D. The ratio of the depth Cw (mm) of the fitting portion hardened layer 2H of the fitting portion 2D to the depth C_{A2} (mm) of the center parallel portion hardened layer 3H is defined as a case depth ratio C_{W}/C_{A2}. In this specification, the case depth ratios C_{W}/C_{A1} and C_{W}/C_{A2} are also collectively referred to as "C_{W}/C_{A}".

In the railway axle 1 according to the invention, C_{W}/C_{A}, which is the ratio of the depth Cw of the fitting portion hardened layer 2H of the fitting portion 2 to the depth C_{A} of the hardened layer 3H of the center parallel portion, is set to 0.34 to 0.93. In other words, the case depth ratio C_{WA}/C_{A1}, which is the ratio of the depth C_{WA} (mm) of the fitting portion hardened layer 2H of the fitting portion 2A to the depth C_{A1} (mm) of the center parallel portion hardened layer 3H, is set to 0.34 to 0.93, and the case depth ratio C_{WD}/C_{A2}, which is the ratio of the depth C_{WD} (mm) of the fitting portion hardened layer 2H of the fitting portion 2D to the depth C_{A2} (mm) of the center parallel portion hardened layer 3H, is set to 0.34 to 0.93.

It is preferable that, at a position 5 mm away from the end portion of the fitting portion 2, the maximum hardness of the fitting portion hardened layer 2H is 400 HV or more in terms of Vickers hardness. In this case, the fraction of martensite generated during induction hardening is high. Therefore, large compressive residual stress is generated in the fitting portion hardened layer 2H. As a result, propagation of fretting fatigue crack in the fitting portion 2 can be suppressed, so that the railway axle 1 can obtain the higher fatigue limit.

It is preferable that the maximum hardness of the center parallel portion hardened layer 3H of the center parallel portion 3 is 400 HV or more in terms of Vickers hardness. In this case, the fraction of martensite generated during induction hardening is high. Therefore, large compressive residual stress is generated in the center parallel portion hardened layer 3H. As a result, it is possible to suppress fatigue fracture having the starting point thereof in the center parallel portion hardened layer 3H of the center parallel portion 3, so that the railway axle 1 can obtain the higher fatigue limit.

As described above, in the railway axle 1 according to the invention, the respective elements in the chemical composition of the base metal portion of the fitting portion 2 and the center parallel portion 3 fall within the above-mentioned ranges, the diameter ratio D_{W}/D_{A} is set to 1.10 to 1.30, the depth Cw of the fitting portion hardened layer 2H of each of the respective fitting portions 2 is set to 2.5 mm to 0.10×D_{W} mm, and the case depth ratio C_{W}/C_{A} is set to 0.34 to 0.93. Therefore, compared with the conventional railway axle, the weight can be reduced due to an increase in the diameter ratio D_{W}/D_{A}, and both the fitting portions 2 and the center parallel portion 3 can obtain the excellent fatigue limit.

In the conventional technique, there may be a case where hardened layers are formed, by rolling, in the outer layers of the fitting portions and the center parallel portion of the railway axle. However, the hardened layer formed by rolling has Vickers hardness of less than 300 HV, that is, has hardness much lower than the hardness of the fitting portion hardened layer 2H and the center parallel portion hardened layer 3H in this embodiment of the invention.

### [Configurations of railway axle 1 other than configuration shown in FIG. 1]

The railway axle 1 of this invention is not limited to the configuration shown in FIG. 1. For example, as shown in FIG. 6 or FIG. 7, one or a plurality of fitting portions 6 may be disposed between the pair of railway wheel fitting portions 2. For example, a gear or the like of a power source not shown in the drawing may be press-fitted on each fitting portion 6, or a brake disc may be press-fitted on each fitting portion 6. In other words, a member other than the railway wheel is press-fitted on each fitting portion 6. In this case, as described above, a column having the largest length in the direction of the center axis is defined as the center parallel portion 3.

In the same manner as the railway wheel fitting portion 2 on which the railway wheel is press-fitted, the hardened layer may also be formed in the fitting portion 6 by performing induction hardening. In this case, fretting with the gear, the disc brake or the like is suppressed, so that the fatigue limit of the railway axle 1 further increases.

### [Production method]

One example of a method for producing the railway axle according to this invention will be described.

Molten steel having the above-mentioned chemical composition is produced. An ingot is produced using the molten steel. Hot forging is performed on the ingot to produce a crude product having the shape of an axle. It is sufficient that the heating temperature at which the ingot is heated during hot forging falls within a well-known temperature range. The heating temperature may be set to 1000 to 1300°C, for example. Quenching and tempering, or a normalizing treatment is performed on the produced crude product.

In the case where the quenching and the tempering are performed, it is sufficient to set the condition of the quenching and the tempering under the well-known conditions. Specifically, a quenching temperature is set to the A_{c3} transformation point or more during quenching. The crude product is held at the quenching temperature and, thereafter, is rapidly cooled by water cooling or oil cooling. A tempering temperature is set to the A_{c1} transformation point or less during the tempering. The crude product is held at the tempering temperature and, thereafter, is allowed to cool. In the case where the normalizing treatment is performed, the crude product is held at a heat treatment temperature which is higher than the A_{c1} transformation point and, thereafter, is allowed to cool. The tempering may be performed after the normalizing treatment.

After the quenching and the tempering, or the normalizing treatment is performed on the crude product, mechanical processing is performed on the crude product when necessary. Thereafter, the induction hardening treatment is performed on the crude product. Hereinafter, the induction hardening treatment will be described in detail.

### [Induction hardening treatment]

During the induction hardening treatment, the outer layer portion of the crude product is heated to a temperature higher than the A_{c3} transformation point by high-frequency heating and, thereafter, is rapidly cooled. A method for rapid cooling may be water cooling, for example.

In the railway axle 1 according to this invention, the diameter ratio D_{W}/D_{A}, which is the ratio of the diameter Dw of the fitting portion 2 to the diameter D_{A} of the center parallel portion 3, is set to 1.10 to 1.30. In other words, compared with the conventional railway axle, the center parallel portion 3 has a smaller diameter than the fitting portion 2. Whereas in the railway axle 1 according to this invention, the depth C_{A} of the center parallel portion hardened layer 3H is larger than the depth Cw of the fitting portion hardened layer 2H. Specifically, C_{W}/C_{A}, which is the ratio of the depth Cw of the fitting portion hardened layer 2H of the fitting portion 2 to the depth C_{A} of the center parallel portion hardened layer 3H, is set to 0.34 to 0.93.

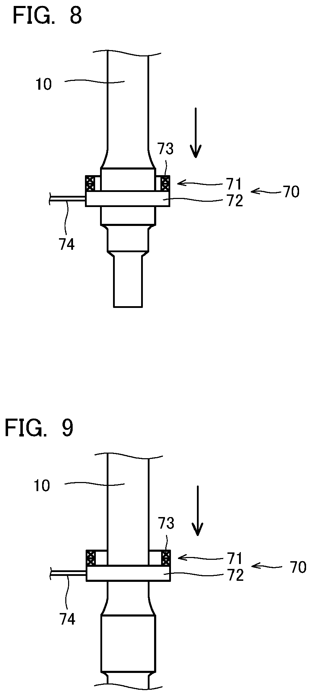

Usually, a high-frequency heating device is used for the induction hardening treatment. FIG. 8 is a view showing one example of an induction hardening apparatus used in the method for producing the railway axle 1 of this embodiment of the invention. Referring to FIG. 8, an induction hardening apparatus 70 includes a high-frequency heating device 71 having an annular shape and a water cooling device 72 having an annular shape. The high-frequency heating device 71 and the water cooling device 72 are coaxially disposed. In FIG. 8, the high-frequency heating device 71 is disposed on the water cooling device 72. FIG. 8 shows the longitudinal cross section (a cross section including the center axis of the high-frequency heating device 71) of the high-frequency heating device 71. A high-frequency heating coil 73 having an annular shape is disposed on the high-frequency heating device 71. Cooling fluid injection nozzles not shown in the drawing are disposed in the water cooling device 72. A cooling fluid is supplied to the water cooling device 72 through a supply pipe 74. The water cooling device 72 injects the cooling fluid toward a crude product 10 of the railway axle from the cooling fluid injection nozzles so as to rapidly cool (quench) the crude product 10.

When induction hardening is performed, as shown in FIG. 8, the crude product 10 of the railway axle 1 (the railway axle 1 on which the induction hardening treatment is not performed) is inserted into the induction hardening apparatus 70. In FIG. 8, the crude product 10 is moved downward from above relative to the induction hardening apparatus 70. In this case, a portion of the crude product 10 is heated to the A_{c3} transformation point or more by the high-frequency heating device 71 and, such a portion is rapidly cooled thereafter by the water cooling device 72, thus forming a hardened layer.

Specifically, in the case where the fitting portion hardened layer 2H is formed in the fitting portion 2 by performing quenching, as shown in FIG. 8, the fitting portion 2 of the crude product 10 is heated to the A_{c3} transformation point or more. Then, the crude product 10 is moved downward from above relative to the induction hardening apparatus 70 so as to rapidly cool the heated fitting portion 2 with the water cooling device 72 disposed below the high-frequency heating device 71. The cooling fluid injection nozzles of the water cooling device 72 inject cooling fluid toward the fitting portion 2. The cooling fluid may be water, for example. The fitting portion hardened layer 2H is formed by the above-mentioned steps.

Whereas in the case where the center parallel portion hardened layer 3H is formed in the center parallel portion 3 by performing quenching, referring to FIG. 9, the center parallel portion 3 of the crude product 10 is heated to the A_{c3} transformation point or more. Then, the crude product 10 is moved downward from above relative to the induction hardening apparatus 70 so as to rapidly cool the heated center parallel portion 3 with the water cooling device 72 disposed below the high-frequency heating device 71. The cooling fluid injection nozzles of the water cooling device 72 inject cooling fluid toward the fitting portion 2. The center parallel portion hardened layer 3H is formed by the above-mentioned steps.

In the railway axle 1 according to the invention, the diameter ratio D_{W}/D_{A} of the railway axle 1 is set to 1.10 to 1.30. Therefore, as shown in FIG. 8 and FIG. 9, a distance between the fitting portion 2 and the high-frequency heating coil 73 (see FIG. 8) during high-frequency heating is smaller than a distance between the center parallel portion 3 and the high-frequency heating coil 73 during high-frequency heating (see FIG. 9). Accordingly, when an output from the high-frequency heating device 71 in the case of performing the high-frequency heating on the fitting portion 2 is equal to an output from the high-frequency heating device 71 in the case of performing the high-frequency heating on the center parallel portion 3, the fitting portion hardened layer 2H is formed with a larger depth than the center parallel portion hardened layer 3H. In this case, C_{W}/C_{A} becomes 1.00 or more.

In view of the above, in this embodiment of the invention, the output from the high-frequency heating device 71 in the case of performing the high-frequency heating on the center parallel portion 3 is set higher than the output from the high-frequency heating device 71 in the case of performing the high-frequency heating on the fitting portion 2 so as to adjust the depth Cw of the fitting portion hardened layer 2H and the depth C_{A} of the center parallel portion hardened layer 3H. For example, frequency of an AC current of the high-frequency heating device 71 is set to 3 to 5 kHz. In this case, heating can be performed within a range having a large depth from the surface of the crude product 10. Further, an adjustment is performed such that the output from the high-frequency heating device 71 during the high-frequency heating performed on the center parallel portion 3 is set to 1.1 to 1.2 times or more as large as the output from the high-frequency heating device 71 during the high-frequency heating performed on the fitting portion 2. The frequency of the high-frequency heating device 71, and the ratio of the output from the high-frequency heating device 71 during the high-frequency heating performed on the center parallel portion 3 to the output from the high-frequency heating device 71 during the high-frequency heating performed on the fitting portion 2 may be suitably adjusted depending on the size of the railway axle 1 and the diameter ratio D_{W}/D_{A}.

The tempering may be performed after the induction hardening treatment is performed. In other words, the tempering is an optional treatment. During the tempering, for example, the tempering temperature is set to 150 to 250°C, and a holding time at the tempering temperature is set to 30 to 150 minutes. One example of the tempering is such that the railway axle is heated to near 200°C, for example, and is held for approximately 120 minutes. After the railway axle is held, the railway axle is cooled with air.

Final mechanical processing may be performed, when necessary, on the crude product 10 on which induction hardening is performed. In other words, the mechanical processing is an optional processing step. In the case where the mechanical processing is performed, the mechanical processing (lathe turning and polishing) is performed within a range where a hardened layer having a required depth can be ensured. The railway axle 1 according to this embodiment of the invention can be produced by the above-mentioned steps.

The above-mentioned method for producing the railway axle 1 is one example of the method for producing the railway axle 1 of this embodiment of the invention. Accordingly, the method for producing the railway axle 1 of the invention is not particularly limited to the above-mentioned production method provided that it is possible to produce the railway axle 1 of this embodiment of the invention where the respective elements in the chemical composition of the base metal portion of the fitting portion 2 and the center parallel portion 3 fall within the above-mentioned ranges, the diameter ratio D_{W}/D_{A} is 1.10 to 1.30, the depth Cw of the fitting portion hardened layer 2H of each of the respective fitting portions 2 is 2.5 mm to 0.10×D_{W} mm, and the case depth ratio C_{W}/C_{A} is 0.34 to 0.93.

### EXAMPLE

Hereinafter, the advantageous effects of the railway axle 1 of this invention will be further specifically described with reference to examples. Conditions in the following example are an example of conditions adopted to confirm feasibility and advantageous effects of the railway axle 1 of this invention. Accordingly, the railway axle 1 of this embodiment of the invention is not limited to such an example of the conditions.

Molten steels having chemical compositions shown in Table 1 were produced. Symbol "-" in Table 1 means that the content of the corresponding element is at a level of impurity. Specifically, symbol "-" in each of Cu, Ni, and V contents means that the content of each element is less than 0.01%. Symbol"-" in Al content means that Al content is less than 0.002%. Symbol "-" in each of Ti and Nb contents means that the content of each element is less than 0.001%. Symbol"-" in each of B and Ca contents means that the content of each element is less than 0.0001%.

### [Table 1]

**TABLE 1**

| Steel No. | Chemical composition (unit being mass%, balance being Fe and impurities) | | | | | | | | | | | | | | | | |
|---|---|---|---|---|---|---|---|---|---|---|---|---|---|---|---|---|---|
| | C | Si | Mn | P | S | Cr | Mo | N | O | Cu | Ni | Al | V | Ti | Nb | B | Ca |
| 1 | 0.26 | 0.29 | 0.69 | 0.012 | 0.006 | 1.11 | 0.26 | 0.0036 | 0.0019 | - | - | 0.032 | - | - | - | - | - |
| 2 | 0.27 | 0.30 | 0.72 | 0.010 | 0.010 | 1.10 | 0.24 | 0.0042 | 0.0018 | 0.05 | - | 0.028 | - | - | - | - | - |
| 3 | 0.25 | 0.31 | 0.73 | 0.012 | 0.008 | 1.08 | 0.25 | 0.0032 | 0.0013 | 0.10 | 0.05 | 0.032 | - | - | - | - | - |
| 4 | 0.26 | 0.28 | 0.71 | 0.013 | 0.007 | 1.15 | 0.27 | 0.0051 | 0.0020 | - | - | 0.030 | 0.050 | - | - | - | - |
| 5 | 0.26 | 0.30 | 0.71 | 0.009 | 0.012 | 1.11 | 0.26 | 0.0056 | 0.0012 | 0.10 | 0.05 | 0.032 | 0.040 | - | - | - | - |
| 6 | 0.25 | 0.29 | 0.70 | 0.015 | 0.013 | 1.07 | 0.24 | 0.0045 | 0.0016 | - | - | 0.033 | - | 0.010 | - | - | - |
| 7 | 0.27 | 0.32 | 0.69 | 0.012 | 0.006 | 1.05 | 0.25 | 0.0048 | 0.0017 | - | - | 0.030 | - | - | 0.022 | - | - |
| 8 | 0.25 | 0.33 | 0.68 | 0.014 | 0.008 | 1.13 | 0.27 | 0.0037 | 0.0020 | - | - | 0.028 | - | - | - | 0.0014 | - |
| 9 | 0.26 | 0.29 | 0.72 | 0.013 | 0.009 | 1.11 | 0.26 | 0.0034 | 0.0017 | - | - | 0.026 | - | - | - | - | 0.0001 |
| 10 | 0.25 | 0.30 | 0.72 | 0.011 | 0.008 | 1.08 | 0.25 | 0.0039 | 0.0014 | - | - | - | - | - | - | - | - |
| 11 | 0.20 | 0.28 | 0.73 | 0.009 | 0.009 | 1.12 | 0.24 | 0.0046 | 0.0010 | 0.02 | 0.02 | 0.033 | - | - | - | - | - |
| 12 | 0.31 | 0.29 | 0.69 | 0.012 | 0.006 | 1.14 | 0.23 | 0.0041 | 0.0018 | 0.02 | 0.02 | 0.028 | - | - | - | - | - |
| 13 | 0.27 | 0.13 | 0.68 | 0.018 | 0.012 | 1.09 | 0.25 | 0.0034 | 0.0020 | 0.01 | 0.01 | 0.036 | - | - | - | - | - |
| 14 | 0.26 | 0.43 | 0.69 | 0.011 | 0.013 | 1.11 | 0.26 | 0.0052 | 0.0019 | 0.02 | 0.01 | 0.040 | - | - | - | - | - |
| 15 | 0.27 | 0.32 | 0.46 | 0.012 | 0.016 | 1.10 | 0.27 | 0.0054 | 0.0017 | 0.01 | 0.02 | 0.033 | - | - | - | - | - |
| 16 | 0.26 | 0.33 | 0.84 | 0.010 | 0.011 | 1.11 | 0.25 | 0.0044 | 0.0015 | 0.02 | 0.02 | 0.032 | - | - | - | - | - |
| 17 | 0.25 | 0.29 | 0.70 | 0.009 | 0.010 | 0.86 | 0.26 | 0.0036 | 0.0020 | 0.02 | 0.01 | 0.028 | - | - | - | - | - |
| 18 | 0.26 | 0.28 | 0.69 | 0.012 | 0.006 | 1.24 | 0.24 | 0.0033 | 0.0011 | 0.02 | 0.02 | 0.033 | - | - | - | - | - |
| 19 | 0.27 | 0.27 | 0.68 | 0.030 | 0.007 | 1.05 | 0.24 | 0.0039 | 0.0019 | 0.01 | 0.02 | 0.030 | - | - | - | - | - |
| 20 | 0.26 | 0.29 | 0.71 | 0.014 | 0.044 | 1.13 | 0.26 | 0.0040 | 0.0014 | 0.01 | 0.02 | 0.036 | - | - | - | - | - |

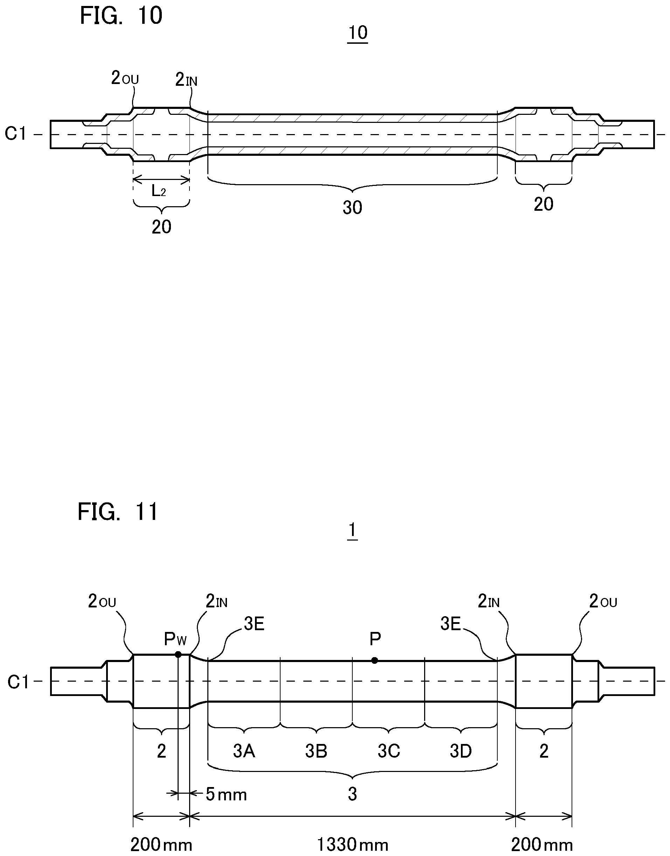

Ingots were produced from molten steels of steel Nos. 1 to 20. Each ingot was heated to 1250°C and, thereafter, was subjected to hot forging to produce a crude product 10 having the shape of an axle shown in FIG. 10. The crude product 10 included a pair of fitting portions 20, and a center parallel portion 30 disposed between the pair of fitting portions 20.

Quenching and tempering were performed on the crude product 10 of each test No. A heat treatment temperature during the quenching was set to 890°C which is higher than the A_{c3} transformation point of steel of each test No. The crude product 10 was held at the heat treatment temperature and, thereafter, was quenched with water. After the quenching was performed on the crude product 10 of each test No., the tempering was performed on the crude product 10. The condition of the tempering is such that a tempering temperature was adjusted to 550 to 670°C so as to allow the crude products 10 of respective test Nos. to have substantially the same surface hardness. Each crude product 10 was held at the tempering temperature for 120 minutes and, thereafter, was cooled with air until the crude product 10 has a normal temperature.

After the tempering was performed on the crude product 10 of each test No., an induction hardening treatment was performed on the crude product 10. The induction hardening treatment was performed on a hatched region of the crude product 10 shown in FIG. 10. Specifically, referring to FIG. 2 and FIG. 3, when a distance, in the direction of the center axis C1 of the produced railway axle 1, between the outer end 2_{OU} and the inner end 2_{IN} of the fitting portion 2 is defined as L₂, the fitting portion hardened layer 2H was formed within a range of at least L₂/3 from the outer end 2_{OU} toward the center position CE2 and within a range of at least L₂/3 from the inner end 2_{IN} toward the center position CE2. The depths of the respective hardened layer (the fitting portion hardened layer 2H, the center parallel portion hardened layer 3H) of the crude product 10 of each test No. were adjusted by adjusting an output from the high-frequency heating device 71 in the induction hardening apparatus 70 shown in FIG. 8 and FIG. 9. The quenching temperature during the induction hardening was the A_{c3} transformation point or more of steel of each test No. After the induction hardening treatment was performed on the crude product 10, the tempering was performed on the crude product 10. During the tempering, the entire crude product 10 of each test No. was held at 200°C for 120 minutes. After the crude product 10 was held, the crude product 10 was cooled with air until the crude product 10 has a normal temperature.

After the induction hardening treatment was performed on the crude product 10, a mechanical processing was performed on the crude product 10 to produce the railway axle 1 shown in FIG. 11. FIG. 11 is a side view of the railway axle 1 of this example. The railway axle 1 of each test No. includes the pair of fitting portions 2 and the center parallel portion 3. Each fitting portion 2 has a width of 200 mm and a diameter D_{W} of 150 mm. As shown in FIG. 11, a distance between the inner ends 2_{IN} of the fitting portions 2 was 1330 mm.

The railway axles 1 were produced by the above-mentioned production steps. The diameters D_{W} of the fitting portions 2, the diameters D_{A} of the center parallel portions 3, and the diameter ratios D_{W}/D_{A} of the railway axles 1 of respective test Nos. are shown in Table 2.

### [Table 2]

**TABLE 2**

| Test No. | Steel No. | Diameter | | | Case depth | | | Fatigue limit ratio | |
|---|---|---|---|---|---|---|---|---|---|
| | | D_{w} (mm) | D_{A} (mm) | D_{W}/D_{A} | C_{W} (mm) | C_{A} (mm) | C_{W}/C_{A} | Fitting portion | Center parallel portion |
| 1 | 1 | 150 | 136 | 1.10 | 8.1 | 10.1 | 0.80 | 1.00 | - |
| 2 | 1 | 150 | 116 | 1.29 | 7.8 | 9.7 | 0.80 | - | 1.00 |
| 3 | 1 | 150 | 130 | 1.15 | 8.3 | 9.9 | 0.84 | 1.04 | 1.00 |
| 4 | 1 | 150 | 143 | 1.05 | 8.0 | 10.1 | 0.79 | 0.91 | - |
| 5 | 1 | 150 | 110 | 1.36 | 6.7 | 7.5 | 0.89 | - | 0.74 |
| 6 | 1 | 150 | 130 | 1.15 | 7.9 | 8.2 | 0.96 | - | 0.82 |
| 7 | 1 | 150 | 130 | 1.15 | 8.3 | 25.4 | 0.33 | - | 0.79 |
| 8 | 1 | 150 | 130 | 1.15 | 17.0 | 19.0 | 0.89 | 0.79 | - |
| 9 | 2 | 150 | 130 | 1.15 | 8.5 | 10.1 | 0.84 | 1.02 | - |
| 10 | 3 | 150 | 130 | 1.15 | 8.3 | 9.7 | 0.86 | 1.00 | - |
| 11 | 4 | 150 | 130 | 1.15 | 8.0 | 9.5 | 0.84 | 1.04 | 1.01 |
| 12 | 5 | 150 | 130 | 1.15 | 8.6 | 10.3 | 0.83 | 1.04 | 1.01 |
| 13 | 6 | 150 | 130 | 1.15 | 8.2 | 9.9 | 0.83 | 1.04 | 1.00 |
| 14 | 7 | 150 | 130 | 1.15 | 8.7 | 10.3 | 0.84 | 1.04 | 1.01 |
| 15 | 8 | 150 | 130 | 1.15 | 8.7 | 9.6 | 0.91 | 1.04 | 1.01 |
| 16 | 9 | 150 | 130 | 1.15 | 7.9 | 9.7 | 0.81 | 1.04 | 1.00 |
| 17 | 10 | 150 | 136 | 1.10 | 8.3 | 10.5 | 0.79 | 1.00 | - |
| 18 | 11 | 150 | 130 | 1.15 | 6.5 | 7.4 | 0.88 | 0.92 | - |
| 19 | 12 | 150 | 130 | 1.15 | 9.0 | 10.3 | 0.87 | - | 0.91 |
| 20 | 13 | 150 | 130 | 1.15 | 8.0 | 9.2 | 0.87 | - | 0.79 |
| 21 | 14 | 150 | 130 | 1.15 | 8.5 | 9.9 | 0.86 | - | 0.96 |
| 22 | 15 | 150 | 130 | 1.15 | 7.7 | 8.5 | 0.91 | - | 0.87 |
| 23 | 16 | 150 | 130 | 1.15 | 10.1 | 11.1 | 0.91 | 0.94 | - |
| 24 | 17 | 150 | 130 | 1.15 | 6.7 | 7.8 | 0.86 | - | 0.89 |
| 25 | 18 | 150 | 130 | 1.15 | 9.9 | 10.9 | 0.91 | 0.96 | - |
| 26 | 19 | 150 | 130 | 1.15 | 8.4 | 9.6 | 0.88 | - | 0.91 |
| 27 | 20 | 150 | 130 | 1.15 | 8.0 | 9.1 | 0.88 | - | 0.88 |
| 28 | 1 | 150 | 130 | 1.15 | 8.2 | 20.8 | 0.39 | 1.01 | - |
| 29 | 1 | 150 | 130 | 1.15 | 8.4 | 16.3 | 0.52 | 1.02 | - |
| 30 | 1 | 150 | 130 | 1.15 | 8.0 | 13.6 | 0.59 | 1.00 | - |
| 31 | 1 | 150 | 130 | 1.15 | 8.2 | 11.6 | 0.71 | 1.04 | - |
| 32 | 1 | 150 | 125 | 1.20 | 8.3 | 10.2 | 0.81 | - | 1.04 |

### [Evaluation test]

### [Fatigue test]

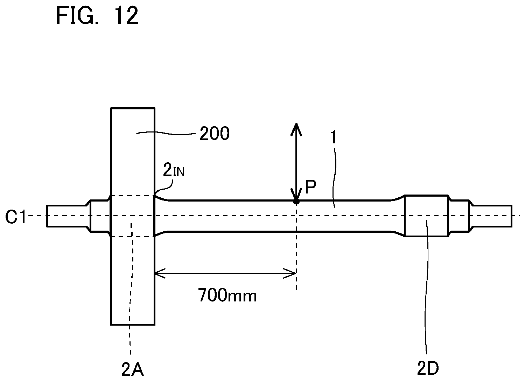

FIG. 12 is a schematic view of a fatigue testing device for the railway axle 1 of this example. Referring to FIG. 12, a jig 200 which corresponds to a wheel was press fitted on the fitting portion 2A on one side of the railway axle 1 of each test No. The jig 200 which corresponds to the wheel was fixed. With such operations, the railway axle 1 was brought into a cantilever state. At the position (a point P in FIG. 11 and FIG. 12) 700 mm inward of the inner end 2_{IN} of the fixed fitting portion 2D of the railway axle 1, a plane bending fatigue test which repeatedly applies a load in a direction perpendicular to the direction of the center axis C1 of the railway axle 1 was performed. An electro-hydraulic servo fatigue tester (load capacity 500 kN) made by SAGINOMIYA SEISAKUSHO, INC. was used as a tester.

Test conditions were such that an alternating load with a stress ratio of -1 was adopted, and frequency was 1 to 3 Hz. The upper limit of the number of repetitions was set to 5×10⁶ times, and the test was performed until the railway axle 1 was broken off. In the case where the railway axle 1 was not broken off by 5×10⁶ times, the test was terminated at such a point, and the railway axle 1 was determined as unbroken. In this embodiment of the invention, the maximum value of a test stress at which the railway axle 1 is not broken off by 5×10⁶ times is assumed as F_{M}. Further, the minimum value of a test stress at which the railway axle 1 is broken off at F_{M} or more before the number of repetitions reaches 5×10⁶ times is assumed as F_{B}. The average value of F_{M} and F_{B} was assumed as F_{A}, and F_{A} which satisfies (F_{B}-F_{M})/F_{A}≤0.10 was defined as the fatigue limit. Whereas, when all railway axles 1 were broken off as a result of the test, that is, when F_{M} couldn't be obtained, from the relationship between a break life and a test stress, a test stress which corresponds to a life of 5×10⁶ times was extrapolated, and was defined as the fatigue limit. In this embodiment of the invention, "test stress" for the fitting portion corresponds to a nominal stress amplitude at the inner end 2_{IN}, and "test stress" for the center parallel portion corresponds to a surface stress amplitude at a break position.

The railway axle 1 of each test No. was evaluated, based on the above-mentioned definition and evaluation method, with respect to the fatigue limit of the fitting portion 2D and the fatigue limit of the center parallel portion 3. Further, the fatigue limit of the fitting portion was obtained as a fatigue limit ratio using test No. 1 as the reference. The fatigue limit of the center parallel portion was obtained as a fatigue limit ratio using test No. 2 as the reference. The obtained fatigue limit ratios of respective test Nos. are shown in Table 2. When either one of the fitting portion or the center parallel portion was broken off, the test was terminated. Therefore, when only one of either the fitting portion or the center parallel portion was broken off, the other of either the fitting portion or the center parallel portion which was not broken off was determined as unbroken (symbol "-" in Table 2).

### [Method for measuring fitting portion case depth Cw]

Subsequently, after the fatigue test was performed on the railway axle 1 of each test No., the depth Cw of the fitting portion hardened layer of the fitting portion 2A was obtained by the above-mentioned method with reference to FIG. 11, a wheel being press-fitted on the fitting portion 2A of the railway axle 1. A position Pw 5 mm away from the inner end 2_{IN} toward the outer end 2_{OU} of the fitting portion 2A in the direction of the center axis (longitudinal direction) was specified. The railway axle 1 was cut at the position P_{W} along a line perpendicular to the center axis C1 of the railway axle 1 to form a cut surface. A sample was taken which has such a cut surface and the outer layer portion of the fitting portion 2. The Vickers hardness test was performed on the above-mentioned cut surface. Specifically, Vickers hardness test in accordance with JIS Z 2244(2009) was performed on the cut surface with a load of 2.9 N and a pitch of 0.1 mm in the radial direction (depth direction) of the railway axle 1 from the surface of the fitting portion 2 so as to measure Vickers hardness (HV). Based on a hardness transition curve obtained by the Vickers hardness test, a distance from the surface of the railway axle 1 to limit hardness (350 HV) was obtained. The obtained distance was defined as a fitting portion case depth Cw. The obtained fitting portion case depths Cw are shown in Table 2.

The depth Cw of the fitting portion hardened layer of the fitting portion 2D was obtained by substantially the same method as used for obtaining the depth Cw of the fitting portion hardened layer of the fitting portion 2A. As a result, in the railway axle 1 of each test No., the case depth Cw of the fitting portion 2A and the case depth Cw of the fitting portion 2D had the same value.

### [Method for measuring center parallel portion case depth C_{A}]

The center parallel portion 3 of the railway axle 1 of each test No. was divided into four sections 3A to 3D equidistantly in the direction of the center axis C1. The depth C_{AA} of the center parallel portion hardened layer 3H in the section 3A was obtained by the following method. Referring to FIG. 4, the section 3A was cut along a plane including the direction of the center axis C1 of the railway axle 1 and the radial direction of the center parallel portion 3. The cut surface was polished to a mirror finished surface and, thereafter, was immersed into Nital etching reagent for approximately 10 seconds to develop the microstructure by etching. The etched cut surface was visually checked to identify a position where the center parallel portion hardened layer 3H has the smallest thickness on the cut surface. At the identified position, a distance from the surface of the railway axle 1 to limit hardness was obtained by the same method as used for obtaining the depth Cw of the fitting portion hardened layer 2H. The obtained distance to the limit hardness was defined as the depth C_{AA} (mm) of the center parallel portion hardened layer 3H.

The depth C_{AB} of the center parallel portion hardened layer 3H in the section 3B was obtained by the following method. The section 3B of the railway axle 1 was cut, at an arbitrary point, along a line perpendicular to the center axis of the railway axle 1 (see FIG. 5). The cut surface was polished to a mirror finished surface and, thereafter, was immersed into Nital etching reagent for approximately 10 seconds to develop the microstructure by etching. The etched observation surface was visually checked to identify a position where the center parallel portion hardened layer 3H has the smallest thickness on the cut surface. At the identified position, a distance from the surface of the railway axle 1 to limit hardness was obtained by the same method as used for obtaining the depth Cw of the fitting portion hardened layer 2H. The obtained distance to the limit hardness was defined as the depth C_{AB} (mm) of the center parallel portion hardened layer 3H.

Of C_{AA} and C_{AB} obtained by the above-mentioned method, either C_{AA} or C_{AB} whichever has the smaller value was defined as the depth C_{A1} (mm) of the center parallel portion hardened layer 3H which corresponds to the fitting portion 2A. The ratio of the depth C_{WA} (mm) of the fitting portion hardened layer 2H of the fitting portion 2A to the depth C_{A1} (mm) of the center parallel portion hardened layer 3H was defined as the case depth ratio C_{W}/C_{A}.

### [Test for observing microstructure of base metal portion BM]

Five samples for observing the microstructure were taken from R/2 position on the cross section perpendicular to the direction of the center axis C1 of the center parallel portion 3 of the railway axle 1 of each test No. The cross section perpendicular to the center axis C1 was used as an observation surface. The observation surface of each sample was polished to a mirror finished surface and, thereafter, was immersed into Nital etching reagent for approximately 10 seconds to develop the microstructure by etching. The etched observation surface was observed by an optical microscope. Each field of view was set to 40000 µm² (magnification ×500), and each sample was observed in one field of view (that is, five samples were observed in five fields of view in total). In each field of view, based on the contrast, martensite and bainite, and a phase (ferrite and the like) other than martensite and bainite were identified. Based on the total area of identified martensite and bainite, and the area (40000 µm²) of each field of view, the total area fraction of martensite and bainite in each field of view was obtained. The arithmetic average value of the total area fractions of martensite and bainite obtained in the respective fields of view was defined as the total area fraction (%) of martensite and bainite.

As a result of the test for observing the microstructure, in the railway axle 1 of any test No., the total area fraction of martensite and bainite was 80% or more in the microstructure of the base metal portion BM.

### [Evaluation result]

Referring to Table 1 and Table 2, chemical compositions of test Nos. 1 to 3, 9 to 17, and 28 to 32 were appropriate, and each of the diameter ratio D_{W}/D_{A}, the depth Cw (mm) of the fitting portion hardened layer, and the case depth ratio C_{W}/C_{A} satisfied the range given in this embodiment of the invention. As a result, both a fitting portion fatigue limit ratio and a center parallel portion fatigue limit ratio were 1.00 or more, so that the excellent fatigue limit was obtained.

Whereas test No. 4 had an excessively small diameter ratio D_{W}/D_{A}. As a result, the fitting portion fatigue limit ratio was less than 1.00. In other words, test No. 4 did not obtain the excellent fatigue limit.

Test No. 5 had an excessively large diameter ratio D_{W}/D_{A}. As a result, the center parallel portion fatigue limit ratio was less than 1.00. In other words, test No. 5 did not obtain the excellent fatigue limit.

Test No. 6 had an excessively large case depth ratio C_{W}/C_{A}. As a result, the center parallel portion fatigue limit ratio was less than 1.00. In other words, test No. 6 did not obtain the excellent fatigue limit.

Test No. 7 had an excessively small case depth ratio C_{W}/C_{A}. As a result, the center parallel portion fatigue limit ratio was less than 1.00. In other words, test No. 7 did not obtain the excellent fatigue limit.

Test No. 8 had an excessively large depth Cw (mm) of the fitting portion hardened layer. As a result, the fitting portion fatigue limit ratio was less than 1.00. In other words, test No. 8 did not obtain the excellent fatigue limit.

Test No. 18 had excessively low C content. As a result, the fitting portion fatigue limit ratio was less than 1.00. In other words, test No. 18 did not obtain the excellent fatigue limit.

Test No. 19 had excessively high C content. As a result, the center parallel portion fatigue limit ratio was less than 1.00. In other words, test No. 19 did not obtain the excellent fatigue limit.

Test No. 20 had excessively low Si content. As a result, the center parallel portion fatigue limit ratio was less than 1.00. In other words, test No. 20 did not obtain the excellent fatigue limit.

Test No. 21 had excessively high Si content. As a result, the center parallel portion fatigue limit ratio was less than 1.00. In other words, test No. 21 did not obtain the excellent fatigue limit.

Test No. 22 had excessively low Mn content. As a result, the center parallel portion fatigue limit ratio was less than 1.00. In other words, test No. 22 did not obtain the excellent fatigue limit.

Test No. 23 had excessively high Mn content. As a result, the fitting portion fatigue limit ratio was less than 1.00. In other words, test No. 23 did not obtain the excellent fatigue limit.

Test No. 24 had excessively low Cr content. As a result, the center parallel portion fatigue limit ratio was less than 1.00. In other words, test No. 24 did not obtain the excellent fatigue limit.

Test No. 25 had excessively high Cr content. As a result, the fitting portion fatigue limit ratio was less than 1.00. In other words, test No. 25 did not obtain the excellent fatigue limit.

Test No. 26 had excessively high P content. As a result, the center parallel portion fatigue limit ratio was less than 1.00. In other words, test No. 26 did not obtain the excellent fatigue limit.

Test No. 27 had excessively high S content. As a result, the center parallel portion fatigue limit ratio was less than 1.00. In other words, test No. 27 did not obtain the excellent fatigue limit.

The present invention has been described heretofore. Therefore, the present invention is defined in the claims that follow.

## Claims

1. A railway axle (1) comprising:
a pair of fitting portions (2) each of which is a column having a diameter Dw, for a railway wheel to be press-fitted thereon; and
a center parallel portion (3) disposed between the pair of fitting portions (2), the center parallel portion (3) being a column having a diameter D_{A} which is smaller than the diameter D_{W}, wherein
the fitting portion (2) includes
an inner end (2_{IN}) disposed closer to the center parallel portion (3) in a direction of a center axis (C1) of the railway axle (1) than a center position of the fitting portion (2) is,
an outer end (2ou) disposed farther from the center parallel portion (3) in the direction of the center axis (C1) of the railway axle (1) than the center position of the fitting portion (2) is,
a fitting portion hardened layer (2H) formed in an outer layer of the fitting portion (2), and
a base metal portion (BM) disposed inward of the fitting portion hardened layer (2H),
the center parallel portion (3) includes
a center parallel portion hardened layer (3H) formed in an outer layer of the center parallel portion (3), and
the base metal portion (BM) disposed inward of the center parallel portion hardened layer (3H),
a chemical composition of the base metal portion (BM) consists of, in mass%,
C: 0.22 to 0.29%,
Si: 0.15 to 0.40%,
Mn: 0.50 to 0.80%,
P: 0.020% or less,
S: 0.040% or less,
Cr: 0.90 to 1.20%,
Mo: 0.15 to 0.30%,
N: 0.0200% or less,
O: 0.0040% or less,
Ca: 0 to 0.0010%,
Cu: 0 to 0.30%,
Ni: 0 to 0.30%,
Al: 0 to 0.100%,
V: 0 to 0.060%,
Ti: 0 to 0.020%,
Nb: 0 to 0.030%,
B: 0 to 0.0050%, and
the balance being Fe and impurities,
D_{W}/D_{A} which is a ratio of the diameter D_{W} of the fitting portion (2) to the diameter D_{A} of the center parallel portion (3) is 1.10 to 1.30,
a depth C_{W} of the fitting portion hardened layer (2H) at a position 5 mm away from the inner end (2_{IN}) toward the outer end (2ou) of the fitting portion (2) in the direction of the center axis (C1) is 2.5 mm to 0.10×D_{W} mm, and
C_{W}/C_{A} which is a ratio of the depth Cw of the fitting portion hardened layer (2H) to a depth C_{A} of the center parallel portion hardened layer (3H) is 0.34 to 0.93,
wherein the depth Cw of the fitting portion hardened layer (2H) and the depth C_{A} of the center parallel portion hardened layer (3H) refer to a distance (mm) in the radial direction from the surface of the respective portion to the position of limit hardness as defined in JIS G 0559 (2008), wherein the limit hardness is 350 HV in terms of Vickers hardness tested in accordance with JIS Z 2244 (2009).

2. The railway axle (1) according to claim 1, wherein
the chemical composition of the base metal portion (BM) contains, in mass%, one or more elements selected from a group consisting of
Cu: 0.01 to 0.30%, and
Ni: 0.01 to 0.30%.

3. The railway axle (1) according to claim 1 or claim 2, wherein
the chemical composition of the base metal portion (BM) contains, in mass%,
Al: 0.005 to 0.100%.

4. The railway axle (1) according to any one of claims 1 to 3, wherein
the chemical composition of the base metal portion (BM) contains, in mass%, one or more elements selected from a group consisting of
V: 0.005 to 0.060%,
Ti: 0.002 to 0.020%, and
Nb: 0.002 to 0.030%.

5. The railway axle (1) according to any one of claims 1 to 4, wherein
the chemical composition of the base metal portion (BM) contains, in mass%,
B: 0.0003 to 0.0050%.

## Patentansprüche

1. Eisenbahn-Radachse (1) umfassend:
ein Paar von Montageabschnitten (2), von denen jeder eine Säule mit einem Durchmesser D_{W} für ein darauf zu press-passendes Eisenbahnrad ist; und
einen mittleren parallelen Abschnitt (3), der zwischen dem Paar von Montageabschnitten (2) angeordnet ist, wobei der mittlere parallele Abschnitt (3) eine Säule mit einem Durchmesser D_{A} ist, der kleiner als der Durchmesser D_{W} ist, wobei
der Montageabschnitt (2) aufweist
ein inneres Ende (2_{IN}), das in einer Richtung einer Mittelachse (C1) der Eisenbahn-Radachse (1) näher an dem mittleren parallelen Abschnitt (3) angeordnet ist als eine Mittelposition des Montageabschnitts (2),
ein äußeres Ende (2_{OU}), das in Richtung der Mittelachse (C1) der Eisenbahn-Radachse (1) weiter von dem mittleren parallelen Abschnitt (3) entfernt angeordnet ist als die Mittelposition des Montageabschnitts (2),
eine gehärtete Schicht des Montageabschnitts (2H), die in einer äußeren Schicht des Montageabschnitts (2) ausgebildet ist, und
einen Basismetallabschnitt (BM), der innerhalb der gehärteten Schicht des Montageabschnitts (2H) angeordnet ist,
der mittlere parallele Abschnitt (3) aufweist
eine gehärtete Schicht des mittleren parallelen Abschnitts (3H), die in einer äußeren Schicht des mittleren parallelen Abschnitts (3) ausgebildet ist, und
den Basismetallabschnitt (BM), der innerhalb der gehärteten Schicht des mittleren parallelen Abschnitts (3) angeordnet ist,
eine chemische Zusammensetzung des Basismetallabschnitts (BM) besteht aus, in Masse-%,
C: 0,22 bis 0,29%,
Si: 0,15 bis 0,40%,
Mn: 0,50 bis 0,80%,
P: 0,020% oder weniger,
S: 0,040% oder weniger,
Cr: 0,90 bis 1,20%,
Mo: 0,15 bis 0,30%,
N: 0,0200% oder weniger,
O: 0,0040% oder weniger,
Ca: 0 bis 0,0010%,
Cu: 0 bis 0,30%,
Ni: 0 bis 0,30%,
Al: 0 bis 0,100%,
V: 0 bis 0,060%,
Ti: 0 bis 0,020%,
Nb: 0 bis 0,030%,
B: 0 bis 0,0050%, und
wobei der Rest Fe und Verunreinigungen sind,
D_{W}/D_{A}, das ein Verhältnis des Durchmessers D_{W} des Montageabschnitts (2) zum Durchmesser D_{A} des mittleren parallelen Abschnitts (3) ist, 1,10 bis 1,30 beträgt,
eine Tiefe C_{W} der gehärteten Schicht des Montageabschnitts (2H) an einer Position 5 mm entfernt vom inneren Ende (2_{IN}) hin zum äußeren Ende (2_{OU}) des Montageabschnitts (2) in Richtung der Mittelachse (C1) 2,5 mm bis 0,10×D_{W} mm beträgt, und
C_{W}/C_{A}, das ein Verhältnis der Tiefe C_{W} der gehärteten Schicht des Montageabschnitts (2H) zu einer Tiefe C_{A} der gehärteten Schicht des mittleren parallelen Abschnitts (3H) ist, 0,34 bis 0,93 beträgt,
wobei die Tiefe C_{W} der gehärteten Schicht des Montageabschnitts (2H) und die Tiefe C_{A} der gehärteten Schicht des mittleren parallelen Abschnitts (3H) sich auf einen Abstand (mm) in der radialen Richtung von der Oberfläche des jeweiligen Bereichs zu der Position der Grenzhärte, wie sie in JIS G 0559 (2008) definiert ist, beziehen, wobei die Grenzhärte 350 HV in Bezug auf die Vickers-Härte ist, die in Übereinstimmung mit JIS Z 2244 (2009) getestet wurde.

2. Eisenbahn-Radachse (1) nach Anspruch 1, wobei
die chemische Zusammensetzung des Basismetallabschnitts (BM), in Masse-%, ein oder mehrere Elemente enthält, die aus einer Gruppe ausgewählt sind, bestehend aus
Cu: 0,01 bis 0,30%, und
Ni: 0,01 bis 0,30%.

3. Eisenbahn-Radachse (1) nach Anspruch 1 oder Anspruch 2, wobei,
die chemische Zusammensetzung des Basismetallabschnitts (BM), in Masse-%,
Al: 0,005 bis 0,100% enthält.

4. Eisenbahn-Radachse (1) nach einem der Ansprüche 1 bis 3, wobei,
die chemische Zusammensetzung des Basismetallabschnitts (BM), in Masse-%, ein oder mehrere Elemente enthält, die aus einer Gruppe ausgewählt sind, bestehend aus
V: 0,005 bis 0,060%,
Ti: 0,002 bis 0,020%, und
Nb: 0,002 bis 0,030%.

5. Eisenbahn-Radachse (1) nach einem der Ansprüche 1 bis 4, wobei,
die chemische Zusammensetzung des Basismetallabschnitts (BM), in Masse-%,
B: 0,0003 bis 0,0050% enthält.

## Revendications

1. Essieu ferroviaire (1) comprenant :
une paire de portions de raccords (2) dont chacune est une colonne ayant un diamètre D_{W}, pour une roue ferroviaire à raccorder par pression sur son dessus ; et
une portion parallèle centrale (3) disposée entre la paire de portions de raccords (2), la portion parallèle centrale (3) étant une colonne ayant un diamètre D_{A} qui est inférieur au diamètre D_{W}, dans lequel
la portion de raccord (2) inclut
une extrémité interne (2_{IN}) disposée plus à proximité de la portion parallèle centrale (3) dans une direction d'un axe central (C1) de l'essieu ferroviaire (1) qu'une position centrale de la portion de raccord (2),
une extrémité externe (2_{OU}) disposée plus à distance de la portion parallèle centrale (3) dans la direction de l'axe central (C1) de l'essieu ferroviaire (1) que la portion centrale de la portion de raccord (2),
une couche durcie de portion de raccord (2H) formée dans une couche externe de la portion de raccord (2), et
une portion de métal de base (BM) disposée vers l'intérieur de la couche durcie de portion de raccord (2H),
la portion parallèle centrale (3) inclut
une couche durcie de portion parallèle centrale (3H) formée dans une couche externe de la portion parallèle centrale (3), et
la portion de métal de base (BM) disposée vers l'intérieur de la couche durcie de portion parallèle centrale (3H),
une composition chimique de la portion de métal de base (BM) consiste en, en % en masse,
C : 0,22 à 0,29 %,
Si : 0,15 à 0,40 %,
Mn : 0,50 à 0,80 %,
P : 0,020 % ou inférieur,
S : 0,040 % ou inférieur,
Cr : 0,90 à 1,20 %,
Mo : 0,15 à 0,30 %,
N : 0,0200 % ou inférieur,
O : 0,0040 % ou inférieur,
Ca : 0 à 0,0010 %,
Cu : 0 à 0,30 %,
Ni : 0 à 0,30 %,
Al : 0 à 0,100 %,
V : 0 à 0,060 %,
Ti : 0 à 0,020 %,
Nb : 0 à 0,030 %,
B : 0 à 0,0050 %, et
le reste étant Fe et des impuretés,
D_{W}/D_{A} qui est un rapport du diamètre D_{W} de la portion de raccord (2) au diamètre D_{A} de la portion parallèle centrale (3) est de 1,10 à 1,30,
une profondeur C_{W} de la couche durcie de portion de raccord (2H) à une position à 5 mm de l'extrémité interne (2_{IN}) vers l'extrémité externe (2_{OU}) de la portion de raccord (2) dans la direction de l'axe central (C1) est de 2,5 mm à 0,10×D_{W} mm, et
C_{W}/C_{A} qui est un rapport de la profondeur C_{W} de la couche durcie de portion de raccord (2H) par rapport à une profondeur C_{A} de la couche durcie de portion parallèle centrale (3H) est de 0,34 à 0,93,
dans lequel la profondeur C_{W} de la couche durcie de portion de raccord (2H) et la profondeur C_{A} de la couche durcie de portion parallèle centrale (3H) font référence à une distance (mm) dans la direction radiale à partir de la surface de la portion respective jusqu'à la position de dureté limite comme définie dans JIS G 0559 (2008), dans lequel la dureté limite est de 350 HV en termes de dureté Vickers testée selon JIS Z 2244 (2009).

2. Essieu ferroviaire (1) selon la revendication 1, dans lequel
la composition chimique de la portion de métal de base (BM) contient, en % en masse, un ou plusieurs éléments choisis dans un groupe consistant en
Cu : 0,01 à 0,30 %, et
Ni : 0,01 à 0,30 %.

3. Essieu ferroviaire (1) selon la revendication 1 ou revendication 2, dans lequel,
la composition chimique de la portion de métal de base (BM) contient, en % en masse,
Al : 0,005 à 0,100 %.

4. Essieu ferroviaire (1) selon l'une quelconque des revendications 1 à 3, dans lequel,
la composition chimique de la portion de métal de base (BM) contient, en % en masse, un ou plusieurs éléments choisis dans un groupe consistant en
V : 0,005 à 0,060 %,
Ti : 0,002 à 0,020 %, et
Nb : 0,002 à 0,030 %.

5. Essieu ferroviaire (1) selon l'une quelconque des revendications 1 à 4, dans lequel,
la composition chimique de la portion de métal de base (BM) contient, en % en masse,
B : 0,0003 à 0,0050 %.
